(19) Europäisches Patentamt
European Patent Office
Office européen des brevets

(11) **EP 4 780 078 A1**

(12) **EUROPEAN PATENT APPLICATION**
published in accordance with Art. 153(4) EPC

(43) Date of publication:
**22.07.2026 Bulletin 2026/30**

(21) Application number: **23951858.2**

(22) Date of filing: **14.09.2023**

(51) International Patent Classification (IPC):
*H04W 48/16* (2009.01)

(52) Cooperative Patent Classification (CPC):
**H04W 48/16**

(86) International application number:
**PCT/CN2023/118915**

(87) International publication number:
**WO 2025/054921 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HE, Chuanfeng
Dongguan, Guangdong 523860 (CN)**

(74) Representative: **Novagraaf Technologies
2 rue Sarah Bernhardt
CS90017
92665 Asnières-sur-Seine Cedex (FR)**

(54) **CELL SEARCH METHOD AND APPARATUS, DEVICE, AND MEDIUM**

(57)    The present application relates to the field of mobile communications, and discloses a cell search method and apparatus, a device, and a medium. The method comprises: searching for first information at a preset frequency location, the first information being used for indicating a range in which system information is to be searched for, and the system information being used for a cell search. A terminal searches for first information at a preset frequency location, and then obtains, by means of the indication of the first information, a range in which system information for a cell search is to be searched for, such that a cell search process can be enhanced. Since the terminal only needs to perform searching at a small number of preset frequency locations to obtain the range in which the system information is to be searched for, blind searching in a system information acquisition process performed by the terminal can be reduced, such that delay in a cell search conducted on the basis of the system information is reduced, thereby achieving a rapid cell search, and reducing power consumption of the terminal.

502

| Searching for first information at a predetermined frequency position(s) |
| --- |

FIG. 5

**Description**

**TECHNICAL FIELD**

The present disclosure relates to the field of mobile communications, and in particular, relates to a method and apparatus for cell search, and a device and a medium thereof.

**RELATED ART**

In a new radio (NR) system, common channels and signals, such as a physical broadcast channel (PBCH) and a synchronization signal (SS), need to cover an entire cell using a multi-beam scanning method to facilitate reception by terminals within the cell. The multi-beam transmission of PBCH and SS is accomplished by defining an SS/PBCH burst set. One SS/PBCH burst set includes one or more SS/PBCH blocks (which are also referred to as synchronization signal blocks, SSB, in the NR system). One SS/PBCH block is used for carrying the SS and PBCH of one beam.

A terminal can perform cell search by acquiring information carried by the SSB. How to specifically implement cell search by the terminal needs further discussion and investigation.

**SUMMARY**

The present disclosure provides a method and apparatus for cell search, and a device and a medium thereof. The technical solutions are as follows.

According to an aspect of the embodiments of the present disclosure, a method for cell search is provided. The method is performed by a terminal. The method includes: searching for first information at a predetermined frequency position(s), wherein the first information is used to indicate a search range of system information, wherein the system information is used for cell search.

According to another aspect of the embodiments of the present disclosure, a method for cell search is provided. The method is performed by a network device. The method includes: transmitting first information at a predetermined frequency position(s), wherein the first information is used to indicate a search range of system information, wherein the system information is used for cell search.

According to an aspect of the embodiments of the present disclosure, an apparatus for cell search is provided. The apparatus includes: a receiving module, configured to search for first information at a predetermined frequency position(s), wherein the first information is used to indicate a search range of system information, wherein the system information is used for cell search.

According to another aspect of the embodiments of the present disclosure, an apparatus for cell search is provided. The apparatus includes: a transmitting module, configured to transmit first information at a predetermined frequency position(s), wherein the first information is used to indicate a search range of system information, wherein the system information is used for cell search.

According to another aspect of the embodiments of the present disclosure, a terminal is provided. The terminal includes: a processor; a transceiver communicably connected to the processor; and a memory configured to store one or more executable instructions executable by the processor; wherein the terminal is configured to load and execute the one or more executable instructions, such that the terminal performs the method for cell search as described above.

According to another aspect of the embodiments of the present disclosure, a network device is provided. The network device includes: a processor; a transceiver communicably connected to the processor; and a memory configured to store one or more executable instructions executable by the processor; wherein the network device is configured to load and execute the one or more executable instructions, such that the network device performs the method for cell search as described above.

According to another aspect of the embodiments of the present disclosure, a computer-readable storage medium is provided. The computer-readable storage medium stores one or more executable instructions therein, wherein the one or more executable instructions, when loaded and executed by a processor, cause the processor to perform the methods for cell search as described above.

According to another aspect of the embodiments of the present disclosure, a chip is provided. The chip includes one or more programmable logic circuits or one or more programs, wherein the chip, when running the one or more programmable logic circuits or the one or more programs, is caused to perform the methods for cell search as described above.

According to another aspect of the embodiments of the present disclosure, a computer program product or a computer program is provided. The computer program product or the computer program includes one or more computer instructions stored in a computer-readable storage medium, wherein the one or more computer instructions, when read by a processor of a computer device from the computer-readable storage medium and executed by the processor, cause the computer device to perform the methods for cell search as described above.

The technical solutions according to the embodiments of the present disclosure at least have the following beneficial effects.

The terminal searches for first information at a predetermined frequency position(s), and acquires, based on indication of the first information, a search range of system information used for cell search, thereby enhancing the cell search process. The terminal can be enabled to acquire the search range of the system information, such as at least one of a frequency-domain range or a time-domain range of the system information, by searching only at a small number of predetermined frequency positions. Therefore, blind search during the terminal's system information acquisition process can be reduced, thus decreasing the delay of cell search based on the system information, enabling fast cell search, and simultaneously reducing the power consumption of the terminal.

## BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.

FIG. 1 is a schematic diagram of an SSB according to some embodiments of the present disclosure;
FIG. 2 is a schematic diagram of a process for indicating a cell-defining SSB according to some embodiments of the present disclosure;
FIG. 3 is a schematic diagram of a process for indicating a frequency range according to some embodiments of the present disclosure;
FIG. 4 is a schematic diagram of a system architecture of a communication system according to some embodiments of the present disclosure;
FIG. 5 is a flowchart of a method for cell search according to some embodiments of the present disclosure;
FIG. 6 is a flowchart of a method for cell search according to some embodiments of the present disclosure;
FIG. 7 is a flowchart of a method for cell search according to some embodiments of the present disclosure;
FIG. 8 is a schematic diagram of a predetermined frequency position according to some embodiments of the present disclosure;
FIG. 9 is a schematic diagram of a first frequency range according to some embodiments of the present disclosure;
FIG. 10 is a schematic diagram of a first frequency range according to some embodiments of the present disclosure;
FIG. 11 is a schematic diagram of time domains of first information and system information according to some embodiments of the present disclosure;
FIG. 12 is a block diagram of an apparatus for cell search according to some embodiments of the present disclosure;
FIG. 13 is a block diagram of an apparatus for cell search according to some embodiments of the present disclosure; and
FIG. 14 is a schematic structural diagram of a communication device according to some embodiments of the present disclosure.

## DETAILED DESCRIPTION

For clearer descriptions of the objectives, technical solutions, and advantages of the present disclosure, the embodiments of the present disclosure are further described in detail hereinafter with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may be referred to as second information, and similarly, second information may be referred to as first information. The term "if" as used herein may be interpreted as "in a case where," "when," or "in response to determining" depending on the context.

Firstly, some terms involved in the embodiments of the present disclosure are described as follows.

**Introduction to** SS/PBCH **Block in the** NR:

In an NR system, common channels and signals, such as the broadcast channel (PBCH) and the synchronization signal (SS), need to cover an entire cell using a multi-beam scanning method to facilitate reception by terminals within the cell. The multi-beam transmission of the broadcast channel and synchronization signal is accomplished by defining an SS/PBCH burst set. One SS/PBCH burst set includes one or more SS/PBCH blocks (which are also referred to as SSB in the NR system). One SS/PBCH block is used for carrying the synchronization signal and broadcast channel of one beam. Therefore, one SS/PBCH burst set may include the synchronization signals of a number of beams corresponding to the quantity of SS blocks within the cell. The maximum number L of SS blocks is associated with the operating band, which is detailed hereinafter.

·In a case where the range of the operating band is up to 3 GHz, L is 4.
·In a case where the range of the operating band is, L is 8.
·In a case where the range of the operating band is from 6 GHz to 52.6 GHz, L is 64.

One SS/PBCH block (SSB) includes one symbol of a primary synchronization signal (PSS), one symbol of a secondary synchronization signal (SSS), and two symbols of NR-PBCH (PBCH).

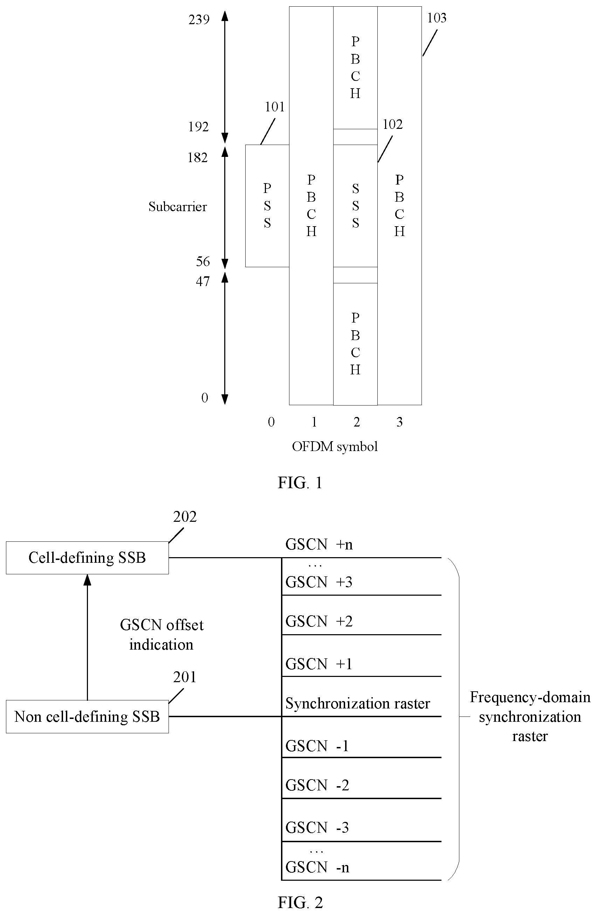

For example, FIG. 1 is a schematic diagram of an SSB according to some embodiments of the present disclosure. As illustrated in FIG. 1, in a time domain, PSS 101 occupies symbol 0 for transmission, SSS 102 occupies symbol 2 for transmission, and PBCH 103 occupies symbols 1, 2, and 3 for transmission. In a frequency domain, SSB occupies 20 physical resource blocks (PRB), i.e., 240 resource elements (RE) (subcarriers) for transmission. Among the time-frequency resources occupied by PBCH 103, resources used for transmitting the demodulation reference signal (DMRS) are also present, wherein the DMRS is used for demodulating the PBCH.

All SS/PBCH blocks within the SS/PBCH burst set are transmitted within a 5 ms (half-frame) time window, and are repeatedly transmitted with a certain period. The period is configured over the higher-layer parameter SSB-timing and includes 5 ms, 10 ms, 20 ms, 40 ms, 80 ms, 160 ms, and the like. With respect to a terminal, an SSB index can be acquired based on the received SS/PBCH block, wherein the SSB index corresponding to a relative position of the SSB within the 5 ms time window. The terminal acquires frame synchronization based on this information and the half-frame indication carried in the PBCH. The index of the SS/PBCH block is indicated by the DMRS of the PBCH or by the information carried by the PBCH.

**Introduction to Synchronization Raster:**

With respect to a radio spectrum in the NR, a frequency-domain position of the SSB is defined by the synchronization raster (synchronization signal raster). In some embodiments, Table 1 illustrates the synchronization raster for different frequency ranges.

Table 1

| Frequency range | Frequency position of SS block $SS_{REF}$ |
|---|---|
| 0 - 3000 MHz | N * 1200kHz + M * 50 kHz, N=1:2499, M $\in$ {1,3,5} |
| 3000-24250 MHz | 3000 MHz + N * 1.44 MHz<br>N = 0:14756 |
| Note 1: In a case where a subcarrier spacing (SCS) of the operating band is used as a raster spacing, a default value is M = 3. | |

As illustrated in Table 1, under different frequency ranges, the possible frequency-domain positions of the SSB (synchronization raster positions) are determined according to the formula provided in the table, and are numbered by the parameter $SS_{REF}$, wherein M and N are intermediate parameters.

After the terminal determines the synchronization raster, the resource mapping for the SSB is determined based on the information illustrated in Table 2.

Table 2

| RE index k | 0 |
| --- | --- |
| Sequence number in the PRB of the SS block $n_{PRB}$ | $n_{PRB}$ = 10 |

As illustrated in Table 2, the synchronization raster is located in the PRB numbered 10 among the 20 PRBs of the synchronization signal block, and located in the RE numbered 0 within this PRB.

With respect to the synchronization raster, under different operating bands, the distribution of the synchronization raster within the operating band can be determined based on the information illustrated in Table 3.

Table 3

| NR operating band | SCS of the SS block | Number range (start - <step size> - end) |
| --- | --- | --- |
| n1 | 15kHz | 5279 - <1> - 5419 |
| n2 | 15kHz | 4829 - <1> - 4969 |
| n3 | 15kHz | 4517 - <1> - 4693 |
| n5 | 15kHz | 2177 - <1> - 2230 |
| | 30kHz | 2183 - <1> - 2224 |
| n7 | 15kHz | 6554 - <1> - 6718 |
| n8 | 15kHz | 2318 - <1> - 2395 |
| n12 | 15kHz | 1828 - <1> - 1858 |
| n20 | 15kHz | 1982 - <1> - 2047 |
| n25 | 15 kHz | 4829 - <1> - 4981 |
| n28 | 15kHz | 1901 - <1> - 2002 |
| n34 | 15kHz | 5030 - <1> - 5056 |
| n38 | 15kHz | 6431 - <1> - 6544 |
| n39 | 15kHz | 4706 - <1> - 4795 |
| n40 | 15kHz | 5756 - <1> - 5995 |
| n41 | 15kHz | 6246 - <3> - 6714 |
| | 30 kHz | 6252 - <3> - 6714 |
| n51 | 15kHz | 3572 - <1> - 3574 |
| n66 | 15kHz | 5279 - <1> - 5494 |
| | 30kHz | 5285 - <1> - 5488 |
| n70 | 15kHz | 4993 - <1> - 5044 |
| n71 | 15kHz | 1547 - <1> - 1624 |
| n75 | 15kHz | 3584 - <1> - 3787 |
| n76 | 15kHz | 3572 - <1> - 3574 |
| n77 | 30kHz | 7711 - <1> - 8329 |
| n78 | 30kHz | 7711 - <1> - 8051 |
| n79 | 30kHz | 8480 - <16> - 8880 |

In some embodiments, as illustrated in Table 3, with respect to frequency band n77, the number range for the synchronization raster is 7711 to 8329, with a total of 619 synchronization rasters. The number is referred to as the global synchronization channel number (GSCN).

**Introduction to the Indication of** SSB:

In the NR system, SSB can be used for the initial access of the terminal (cell search), and can also be configured as a measurement reference signal for the terminal to perform measurements. The former is used for terminal access to the cell, the frequency-domain position of the SSB is located on the synchronization raster, and the SSB is associated with system information block 1 (SIB 1) information. The latter is not associated with SIB 1 information, and even though the frequency-domain position of the SSB is also located on the synchronization raster, the SSB cannot be used for terminal access to the cell. The SSB associated with SIB 1 is referred to as cell-defining SSB, while the SSB not associated with SIB 1 is referred to as non-cell-defining SSB. That is, the terminal can only access the cell via the cell-defining SSB. Due to the flexibility of NR system design, non-cell-defining SSB can also be configured at the frequency-domain position of the synchronization raster. For a terminal performing initial access, in a case of searching for SSB based on the synchronization raster, the terminal may detect the two types of SSB. Upon detecting a non-cell-defining SSB, since the SSB is not associated with SIB 1 information, the terminal cannot acquire control information for receiving SIB 1 from master information block (MIB) information carried by PBCH in the SSB. The terminal must continue searching for a cell-defining SSB to access the cell. NR supports a network-assisted cell search solution, where the base station may carry one piece of indication information in the non-cell-defining SSB to indicate a frequency offset between the GSCN of the cell-defining SSB and the GSCN of the currently detected non-cell-defining SSB. In this way, even if the terminal detects a non-cell-defining SSB, the terminal can determine the GSCN of the cell-defining SSB based on the indication information carried in the non-cell-defining SSB. Thus, the terminal can directly search for the cell-defining SSB at the targeted GSCN position based on the assistance information, thereby avoiding a blind search for the cell-defining SSB by the terminal, which reduces the delay and power consumption during the cell search. The GSCN offset information is indicated by the information carried in PBCH.

The information carried by PBCH includes MIB information and eight bits of information in the physical layer information. The physical layer information includes system frame number (SFN), half-frame indication, SSB index, and the like. The MIB information carried by PBCH includes a 6-bit SFN information field, a 1-bit subcarrier spacing information field, a 4-bit SSB subcarrier offset information field, an 8-bit pdcch-ConfigSIB 1 information field, and the like. The 8-bit pdcch-ConfigSIB1 information field is used to indicate the search space information of the physical downlink control channel (PDCCH) of the scheduling information of the PDCCH that carries SIB 1. The SSB subcarrier offset information field is used to indicate the value of the subcarrier offset $k_{SSB}$ between the SSB and the control resource set (CORESET) #0. The offset range includes 0-23 and 0-11 subcarriers, which are respectively represented by five bits (the subcarrier offset information field of the SSB in the MIB and one physical layer signaling bit) and four bits and correspond to frequency range 1 (FR 1) and frequency range 2 (FR 2), respectively. In a case where $k_{SSB}$ = 0-23 (FR 1), or $k_{SSB}$ = 0-11 (FR 2), the current SSB is associated with SIB 1. In a case where $k_{SSB}$ > 23 (FR 1), or $k_{SSB}$ > 11 (FR 2), the value of $k_{SSB}$ is used by the network to indicate that the current SSB is not associated with SIB 1. In this case, the network can indicate the position of the synchronization raster for the cell-defining SSB, specifically by jointly indicating the GSCN of the cell-defining SSB based on $k_{SSB}$ and the bits in the pdcch-ConfigSIB1 information field. Since the pdcch-ConfigSIB1 information field includes eight bits, by indicating the offset between the GSCN of the cell-defining SSB and the GSCN of the current non-cell-defining SSB, the positions of 256 synchronization rasters can be indicated. By combining the different values in the subcarrier offset information field of the SSB, the indication range can be further extended, thereby enabling the indication of N*265 synchronization raster positions. For FR 1 and FR 2, based on the content illustrated in Table 4 and Table 5 hereinafter, the offset between the GSCN of the synchronization raster corresponding to the cell-defining SSB and the GSCN of the synchronization raster corresponding to the currently detected non-cell-defining SSB is jointly indicated based on $k_{SSB}$ and pdcch-ConfigSIB1, and the GSCN of the synchronization raster of the indicated cell-defining SSB is acquired through the formula ( $N_{GSCN}^{Reference} + N_{GSCN}^{Offset}$ ). $N_{GSCN}^{Reference}$ indicates the GSCN of the non-cell-defining SSB, and $N_{GSCN}^{Offset}$ GSCN GSCN GSCN GSCN indicates the offset between the GSCN of the cell-defining SSB and the GSCN of the current non-cell-defining SSB. The GSCN offset range indicated in Table 4 includes (-768 ... -1, 1 ... 768), and the GSCN offset range in Table 5 includes (-256 ... -1, 1 ... 256). In Table 4, $k_{SSB}$ = 30 is a reserved value; in Table 5, $k_{SSB}$ = 14 is a reserved value.

Table 4

| $k_{SSB}$ | $N_{GSCN}^{Offset}$ | pdcch-ConfigSIB1 | |
|---|---|---|---|
| | 24 | 0, 1, ..., 255 | 1, 2, ..., 256 |
| | 25 | 0, 1, ..., 255 | 257, 258, ..., 512 |

(continued)

| $k_{SSB}$ | $N_{GSCN}^{Offset}$ | pdcch-ConfigSIB1 | |
|---|---|---|---|
| 26 | 0, 1, ..., 255 | | 513, 514, ...., 768 |
| 27 | 0, 1, ..., 255 | | -1, -2, ..., -256 |
| 28 | 0, 1, ..., 255 | | -257, -258, ..., -512 |
| 29 | 0, 1, ..., 255 | | -513, -514, ...., -768 |
| 30 | 0, 1, ..., 255 | | Reserved value, reserved value, ..., reserved value |

Table 5

| $k_{SSB}$ | $N_{GSCN}^{Offset}$ | pdcch-ConfigSIB1 | |
|---|---|---|---|
| 12 | 0, 1, ..., 255 | | 1, 2, ..., 256 |
| 13 | 0, 1, ..., 255 | | -1, -2, ..., -256 |
| 14 | 0, 1, ..., 255 | | Reserved value, reserved value, ..., reserved value |

In some embodiments, FIG. 2 is a schematic diagram of a process for indicating a cell-defining SSB according to some embodiments of the present disclosure. As illustrated in FIG. 2, the base station indicates the GSCN of the cell-defining SSB 202 by combining the GSCN offset indication information carried in the non-cell-defining SSB 201 with the synchronization raster where the non-cell-defining SSB 201 is located.

Another scenario is present in cell search: the operator may not deploy a cell-defining SSB on certain carriers (for example, a carrier used only as a carrier of a secondary cell) or frequency bands. In such cases, the terminal actually does not need to perform a cell search within these frequency ranges. In a case where the network can indicate these frequency ranges to the terminal, the terminal may skip cell search within these frequency domains, thereby reducing the delay and power consumption incurred by the terminal attempting cell search. Similarly, the network indicates the frequency range information by jointly using $k_{SSB}$ and the bits in the pdcch-ConfigSIB1 information field. In a case where the terminal receives $K_{SSB}$ corresponding to FR 1 = 31 or $k_{SSB}$ corresponding to FR 2 = 15, the terminal considers that no cell-defining SSB is present in the GSCN range $[N_{GSCN}^{Reference} - N_{GSCN}^{Start}, N_{GSCN}^{Reference} + N_{GSCN}^{End}]$, wherein $N_{GSCN}^{Start}$ and $N_{GSCN}^{End}$ are respectively indicated by GSCN GSCN' GSCN GSCN GSCN GSCN the upper four bits and the lower four bits of the pdcch-ConfigSIB1 information field.

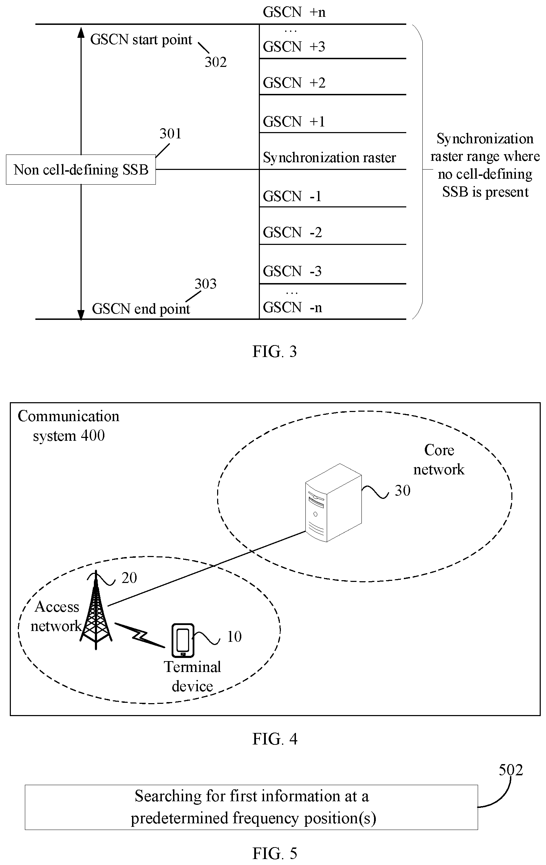

In some embodiments, FIG. 3 is a schematic diagram of a process for indicating a frequency range according to some embodiments of the present disclosure. As illustrated in FIG. 3, in the above network-assisted cell search process, by using the synchronization raster where the non-cell-defining $_{SSB}$ 301 is located in combination with $N_{GSCN}^{Start}$ and $N_{GSCN}^{End}$ indicated by the network, the range of synchronization rasters in which the cell-defining SSB is not present can be acquired, that is, from GSCN start point 302 to GSCN end point 303.

In the above solutions, the process of cell search by the terminal is achieved by searching for synchronization signals within one frequency band. This process requires the terminal to determine whether a cell has been deployed by blindly searching for synchronization signals at certain frequency positions. This results in cell search delay and terminal power consumption. In the NR system, the introduced network-assisted cell search enables the terminal, upon detecting a non-cell-defining SSB, to acquire the frequency position of the cell-defining SSB, thereby reducing the cell search delay and terminal power consumption. However, in this process, the terminal still needs to search for synchronization signals at all frequency positions within one frequency band, and for the search process of SSB, the search-induced delay and power consumption have not been reduced.

In the method according to the embodiments of the present disclosure, the terminal searches for first information at a predetermined frequency position(s), and acquires, based on indication of the first information, a search range of system information used for cell search, for example, at least one of a frequency-domain range or a time-domain range of the system information. In NR systems and subsequent evolution systems, such as 6th generation mobile communication technology (6G) systems, the solutions according to the embodiments of the present disclosure may be adopted for system design, thus enhancing the cell search process. Since the method according to the embodiments of the present disclosure can reduce blind search performed by the terminal during the process of acquiring system information, the delay of cell search based on system information can be reduced, thus realizing rapid cell search and reducing the power consumption of the terminal.

FIG. 4 illustrates a schematic diagram of a system architecture of a communication system 400 according to some embodiments of the present disclosure. The system architecture may include: a terminal 10, an access network device 20, and a core network device 30.

The terminal 10 may refer to a user equipment (UE), an access terminal, a subscriber unit, a subscriber station, a mobile station, a mobile terminal, a remote station, a remote terminal, a mobile device, a wireless communication device, a user agent, or a user apparatus. In some embodiments, the terminal is also a cellular phone, a cordless phone, a Session Initiation Protocol (SIP) phone, a wireless local loop (WLL) station, personal digital assistant (PDA), a handheld device with wireless communication function, a computing device, or another processing device connected to a wireless modem, a vehicle-mounted device, a wearable device, a terminal in a 5th generation system (5GS), or a terminal in a public land mobile network (PLMN) evolved in the future, or the like, which is not limited in the embodiments of the present disclosure. For the convenience of description, the devices described above are collectively referred to as terminals.

It should be noted that a plurality of terminals 10 are usually deployed, and one or more terminals 10 may be distributed in a cell managed by each access network device 20. In addition, one or more terminals 10 may also be distributed outside the cell managed by the access network device 20. Different terminals 10 may communicate with each other based on a sidelink.

The access network device 20 is a device deployed in an access network to provide a wireless communication function for the terminal 10. The access network device 20 may include various forms of a macro base station, a micro base station, a relay station, an access point, or the like. In systems using different radio access technologies, a device with the functionality of an access network device may have different names. For example, the device is referred to as gNodeB or gNB in the 5G NR system. As communication technologies evolve, the name "access network device" may change. For the convenience of description, in the embodiments of the present disclosure, the above apparatuses for providing the terminals 10 with the wireless communication function are collectively referred to as access network devices. In some embodiments, a communication relationship is established between the terminal 10 and the core network device 30 via the access network device 20. In some embodiments, in a long-term evolution (LTE) system, the access network device 20 is an evolved universal terrestrial radio access network (EUTRAN) or one or more eNodeBs in EUTRAN; and in a 5G NR system, the access network device 20 is a radio access network (RAN) or one or more gNBs in the RAN.

The core network device 30 mainly functions to provide user connections, user management, and service bearing, and serves as a bearer network to provide an interface to an external network. For example, the core network device in the 5G NR system includes an access and mobility management function (AMF) entity, a user plane function (UPF) entity, a session management function (SMF) entity, or the like. The access network device 20 and the core network device 30 are collectively referred to as network devices.

In some embodiments, the access network device 20 and the core network device 30 communicate with each other over some air technology, such as an NG interface in the 5G NR system. The access network device 20 and the terminal 10 communicate with each other over some air technology, such as a Uu interface. The terminal 10 and the terminal 10 communicate with each other over some air technology, such as a PC5 interface.

FIG. 5 is a flowchart of a method for cell search according to some embodiments of the present disclosure. The method is performed by a terminal. The method includes the following processes.

**In process 502,** first information is searched for at a predetermined frequency position(s).

The first information is used to indicate a search range of system information, which may also be understood as any of the following expressions: the first information is used to narrow the search range of the system information, or the first information is used to locate the search range of the system information. The search range of the system information includes at least one of a position of the system information in a frequency domain or a position of the system information in a time domain; that is, the first information is used to instruct the terminal to acquire the system information.

The predetermined frequency position is a frequency position predetermined for searching for the first information. In some embodiments, the information indicating the predetermined frequency position is set in the terminal or in a subscriber identity module (SIM) card of the terminal.

In some embodiments, in a case where the first information is used to narrow the search range of the system information, the search range of the system information prior to narrowing is defined by a first frequency position predetermined for searching for the system information. In some embodiments, the first frequency position refers to a frequency position of the synchronization raster. That is, based on the indication of the first information, the search range of the system information indicated by the synchronization raster can be narrowed. For example, the search range of the system information indicated by the first information is smaller than the search range of the system information indicated by the first frequency position, or the first information can indicate the degree or manner in which the search range of the system information indicated by the first frequency position is narrowed.

For the specific contents of the first information being used to narrow the search range of the system information, the first information being used to locate the search range of the system information, and the first information being used to indicate the search range of the system information, reference may be made to the following description, and the embodiments of the present disclosure do not describe these herein.

The system information mentioned above is used for cell search. In some embodiments, the system information includes at least one of PBCH, SS, PSS, SSS, or SSB. SSB includes at least one of a cell-defining SSB or a non-cell-defining SSB. In some embodiments, the first information is different from the system information. In some embodiments, the system information is also referred to as broadcast information, cell search information, a system signal, a broadcast signal, a cell search signal, or the like. The specific name of the system information is not restricted in the embodiments of the present disclosure.

In some embodiments, the first information is used to indicate at least one of: a frequency-domain position of the system information, a time-domain position of the system information, the number of pieces of the system information in a system information set, or a communication parameter corresponding to the system information.

The system information set is a set of system information. In some embodiments, the system information is SSB, the system information set is an SS/PBCH burst set, and the system information set is used to realize multi-beam transmission of the system information; that is, each piece of system information corresponds to one beam. The communication parameter corresponding to the system information is used to reflect a relevant parameter adopted for transmitting the system information, for example, a subcarrier spacing corresponding to the system information.

In some embodiments, the first information is a first signal. In some embodiments, the first signal includes at least one of: a synchronization signal, or a reference signal.

In some embodiments, the synchronization signal includes at least one of PSS or SSS. The reference signal includes at least one of a tracking reference signal (TRS) or a DMRS. It should be noted that the type of the first signal is only provided as an example; the first signal can be other types of signals, for example, signals other than the above-mentioned synchronization signal and reference signal, which is not limited in the embodiments of the present disclosure.

In some embodiments, the format of the first signal is a sequence. For example, the first signal adopts a ZC sequence or an m sequence. In some embodiments, the sequence used by the first signal is different from that used by the synchronization signal for cell search.

In some embodiments, a sequence used by the first signal is associated with indication information carried by the first signal. The indication information includes at least one of first indication information, second indication information, third indication information, or fourth indication information. The first indication information is used to indicate the frequency-domain position of the system information, the second indication information is used to indicate the time-domain position of the system information, the third indication information is used to indicate the number of pieces of the system information in the system information set, and the fourth indication information is used to indicate the communication parameter corresponding to the system information. For example, in a case of generating the sequence used by the first signal, eight types may be generated, such that the sequence can be regarded as carrying three bits of information. Based on the three bits of information, the content in the indication information can be implicitly indicated. The first signal can be made to carry more bits of information to achieve cases requiring the carrying of more information.

In some embodiments, the first information is a first channel. In some embodiments, the first channel includes at least one of: a PBCH, a PDCCH, an index channel, or a search channel.

In some embodiments, in a case where the first channel is the PBCH, the format of the first channel is the same as or different from that of the PBCH in the SSB used for cell search. In a case where the first channel is the PDCCH, the format of the first channel is the same as or different from that of the PDCCH, which is mainly used to carry control information in the related art. The first channel carries the indication information carried by the first information by means of the bits carried in the channel. It should be noted that the types of the first channel are only provided as examples; the first channel can be other types of channels, for example, channels other than those illustrated above, such as other channels carrying broadcast, control, system, or other information, which is not limited in the embodiments of the present disclosure.

### Setting for the predetermined frequency position:

The predetermined frequency position is located within an operating band, and one or more predetermined frequency positions are present within the operating band. In some embodiments, the operating band is a frequency band that the terminal can currently access in the mobile communication system or is supported by a network device, or is a frequency band supported by the current operator of the terminal. The frequency band supported by the operator can be indicated by information carried in the SIM card.

In some embodiments, a plurality of predetermined frequency positions are present within the operating band. The predetermined frequency positions are spaced apart, and frequency-domain spacings between adjacent ones of the predetermined frequency positions are the same. In some embodiments, the frequency-domain spacing is predefined. In some embodiments, the frequency-domain spacing is pre-configured, for example, pre-configured by means of information carried in the SIM card.

In some embodiments, a plurality of predetermined frequency positions are present within the operating band. The predetermined frequency positions are spaced apart, and frequency-domain spacings between at least two sets of adjacent ones of the predetermined frequency positions are different. That is, for a plurality of sets of adjacent ones of the predetermined frequency positions, the frequency-domain spacings corresponding to the plurality of sets of adjacent ones of the predetermined frequency positions may be completely different or partially the same. In some embodiments, the frequency-domain spacing is predefined. In some embodiments, the frequency-domain spacing is pre-configured, for example, pre-configured by means of information carried in the SIM card.

In some embodiments, one predetermined frequency position is present within the operating band.

In some embodiments, the predetermined frequency position includes a portion of a plurality of first frequency positions. The first frequency position is a predetermined frequency position used for searching for the system information. In some embodiments, the first frequency position is associated with the frequency position of the system information. That is, in a case where the first frequency position is detected, the frequency position of the system information can be acquired.

In some embodiments, the first frequency position includes the frequency position of the synchronization raster, and the first frequency position can be regarded as the synchronization raster. It should be noted that the specific name of the first frequency position is not restricted in the embodiments of the present disclosure.

By predetermining a portion of synchronization rasters among all synchronization rasters for the terminal to search for the first information, the predetermined portion of synchronization rasters has a sparser distribution compared to all synchronization rasters. Since the number of the predetermined portion of synchronization rasters is smaller than that of all synchronization rasters, the terminal's search delay and power consumption can be greatly reduced, depending specifically on the spacing of the synchronization rasters. Taking an example where the predetermined frequency positions are distributed with equal spacing, in a case where the spacing between predetermined frequency positions (the predetermined portion of synchronization rasters) is N times the spacing of the original synchronization rasters, that is, one out of every N synchronization rasters is selected as a predetermined frequency position, then the number of synchronization rasters searched by the terminal is only 1/N of the original amount, wherein N is a positive integer greater than 1.

In some embodiments, the predetermined frequency position includes a frequency position other than the first frequency position. The first frequency position is a predetermined frequency position for searching for system information. In some embodiments, the first frequency position includes the frequency position of the synchronization raster. That is, a frequency position is set outside the synchronization raster for the terminal to search for the first information. In some embodiments, under this circumstance, the predetermined frequency position is indicated by an absolute radio frequency channel number (ARFCN).

**With respect to the indication of the frequency-domain position of the system information by the first information:**

In some embodiments, the first information carries first indication information, wherein the first indication information is used to indicate the frequency-domain position of the system information. In some embodiments, the first indication information is used to indicate that the system information is present in one or more first frequency ranges, or that the system information is not present in the one or more first frequency ranges.

In some embodiments, the first frequency range is associated with the predetermined frequency position, and the terminal can determine the first frequency range based on the predetermined frequency position. In this case, the first indication information does not need to carry information used to indicate the first frequency range, but only carries system information indication information. The system information indication information is used to indicate whether the system information is present in the first frequency range. The terminal can determine the first frequency range based on the predetermined frequency position of the currently detected first information, and in combination with the system information indication information, the terminal can determine whether the system information is present in the first frequency range corresponding to the predetermined frequency position of the currently detected first information.

In some embodiments, the first frequency range is a frequency range centered on the predetermined frequency position, and a size of the first frequency range is associated with a first frequency-domain spacing. In some embodiments, the size of the first frequency range is equal to the first frequency-domain spacing. The first frequency-domain spacing is a frequency-domain spacing between the predetermined frequency position and an adjacent frequency position. The adjacent frequency position is a predetermined frequency position adjacent to the predetermined frequency position (the predetermined frequency position of the currently detected first information). In some embodiments, the first indication information carries 1-bit system information indication information, thereby indicating whether the system information is present in the first frequency range determined based on the predetermined frequency position. For example, "0" indicates that the system information is not present in the first frequency range, and "1" indicates that the system information is present in the first frequency range.

In some embodiments, the first indication information includes frequency range indication information, wherein the frequency range indication information is used to indicate the one or more first frequency ranges. In some embodiments, the first indication information further includes system information indication information, wherein the system information indication information is used to indicate whether the system information is present in each of the one or more first frequency ranges. In some embodiments, the first frequency range indicated by the frequency range indication information is the frequency range in which the system information is present.

In some embodiments, the frequency range indication information and the system information indication information are implemented as one piece of information. In some embodiments, the frequency range indication information and the system information indication information are set respectively. The first indication information, by carrying a specific number of bits, carries the frequency range indication information and the system information indication information; wherein the number of bits is determined based on the contents of the frequency range indication information and the system information indication information.

In some embodiments, the frequency range indication information is used to indicate the one or more first frequency ranges among a plurality of second frequency ranges. The second frequency ranges are predefined frequency ranges or pre-configured frequency ranges. In some embodiments, a plurality of second frequency ranges are set within the operating band based on a predefined bandwidth, and these second frequency ranges are numbered. The frequency range indication information carried by the first indication information is used to indicate the number(s) of one or more second frequency ranges, thereby acquiring one or more first frequency ranges. In some embodiments, the second frequency range indicated by the first indication information is the first frequency range in which the system information is present.

In some embodiments, the frequency range indication information is further used to indicate one or more frequency positions in the first frequency range. The one or more frequency positions may be frequency positions in which the system information is present or frequency positions in which the system information is not present, which may specifically depend on the number of bits used by the first indication information carried in the first information. In some embodiments, the bits in the first indication information are used to indicate the number of the second frequency range, as well as the number of the frequency position in the indicated second frequency range. In this case, only a small number of predetermined frequency positions in the operating band need to be searched for the first information to precisely indicate a large number of frequency-domain positions in which the system information is present or is not present. For example, one predetermined frequency position is predetermined for searching for the first information, such that the range over which the terminal searches for system information can be further reduced. For example, in a case where the terminal performs cell search in the operating band, the terminal can search for the first information at one predetermined frequency position, and based on the first indication information carried in the first information, search for system information at the frequency position in the first frequency range indicated by the first indication information, thereby precisely achieving the cell search process.

**With respect to the indication of the time-domain position of the system information by the first information:**

In some embodiments, the first information carries second indication information, wherein the second indication information is used to indicate a time-domain position of the system information. The terminal can search for the system information based on the time-domain position of the system information, thereby achieving cell search.

In some embodiments, the second indication information is used to indicate a time-domain offset between a time-domain position of the first information and a first time-domain unit. The first time-domain unit is a time-domain unit containing the system information. In some embodiments, the time-domain offset is indicated by bits carried in the second indication information.

In some embodiments, the system information belongs to a system information set; that is, the system information is a collection of a group of system information. In this case, the second indication information is used to indicate a time-domain offset between the time-domain position of the first information and a time-domain unit containing the system information set. In some embodiments, the system information includes SSB, and the system information set includes an SSB set.

In some embodiments, the timing relationship between the time-domain position of the first information and a start position of the time-domain unit containing the first information is predefined. In some embodiments, the timing relationship between the time-domain position of the first information and the start position of the time-domain unit containing the first information is indicated by information carried in the first information. The granularity of the time-domain unit of the first information includes at least one of a radio frame, a half-frame, a subframe, or a time-domain symbol. The terminal obtains time synchronization with the network based on the detected first information, and then, in combination with the time-domain offset indicated by the second indication information, the terminal can determine the first time-domain unit containing the system information. In some embodiments, in a case of periodic transmission of the system information, the time-domain offset is defined as a time-domain offset between the first information and the nearest system information subsequent to the time-domain unit containing the first information.

In some embodiments, the timing relationship between the time-domain position of the system information and a start position of the first time-domain unit is predefined or pre-configured.

In some embodiments, the first time-domain unit containing the system information includes at least one of: a radio frame, a half-frame, a subframe, or a time-domain symbol.

In some embodiments, the second indication information is used to indicate a period of the system information. The terminal, based on the period of the system information, searches for the system information to achieve cell search. In some embodiments, the period of the system information is indicated by bits carried in the second indication information.

In some embodiments, the second indication information is used to indicate a first time-domain unit containing the system information. That is, the second indication information is used to directly indicate the position of the first time-domain unit. In some embodiments, the position of the first time-domain unit is indicated by bits carried in the second indication information. For the specific description of the first time-domain unit, reference may be made to the foregoing content, which is not elaborated herein in the embodiments of the present disclosure. In some embodiments, in the NR system, the SSB is located within the time range of the half-frame of a radio frame, which may be the first or second half-frame, and the second indication information can directly indicate the half-frame containing the SSB.

**With respect to the indication of other information by the first information:**

In some embodiments, the first information carries third indication information, wherein the third indication information is used to indicate the number of pieces of the system information in a system information set. In some embodiments, the third indication information is further used to indicate a position, within the system information set, of system information that is actually transmitted in the system information set.

In some embodiments, the system information is SSB, the system information set is an SS/PBCH burst set, and the system information set is used to realize multi-beam transmission of the system information; that is, each piece of system information corresponds to one beam. In some embodiments, referring to the background description, in a case of 3 GHz to 6 GHz, the SSB set includes up to eight SSBs, but the network device may only transmit a portion of the SSBs; the third indication information can be used to indicate the actually transmitted SSBs.

In some embodiments, the first information carries fourth indication information, wherein the fourth indication information is used to indicate a communication parameter corresponding to the system information. The communication parameter corresponding to the system information is used to reflect a relevant parameter adopted for transmitting the system information. In some embodiments, the communication parameter includes a subcarrier spacing.

It should be noted that the first information may carry one or more of the first indication information, the second indication information, the third indication information, and the fourth indication information. Moreover, each or a portion of the first indication information, the second indication information, the third indication information, and the fourth indication information may also be carried in different first information.

It should be noted that the method according to the embodiments of the present disclosure is applicable to long-term evolution (LTE) systems and NR systems. The method according to the embodiments of the present disclosure is also applicable to subsequent evolution systems of the above mobile communication system, such as 6G. In addition, in a case of applying the method according to the embodiments of the present disclosure in the above mobile communication system, the method can be applied to a specified frequency band, a specified terminal, a specified terminal group, a specified terminal type, a specified service, or a specified subsystem. For example, in mobile communication information, the method according to the embodiments of the present disclosure is only applied to a terminal with a power-saving requirement, or, for the subsystems constituting the mobile communication system, the method according to the embodiments of the present disclosure is only applied to a specified subsystem among the subsystems.

In summary, in the method according to the embodiments, the terminal searches for the first information at the predetermined frequency position, and acquires, based on the indication of the first information, the search range of the system information used for cell search, thereby enhancing the cell search process. The terminal can be enabled to acquire the search range of the system information, such as at least one of a frequency-domain range or a time-domain range of the system information, by searching only at a small number of predetermined frequency positions. Therefore, blind search during the terminal's system information acquisition process can be reduced, thus decreasing the delay of cell search based on the system information, enabling fast cell search, and simultaneously reducing the power consumption of the terminal.

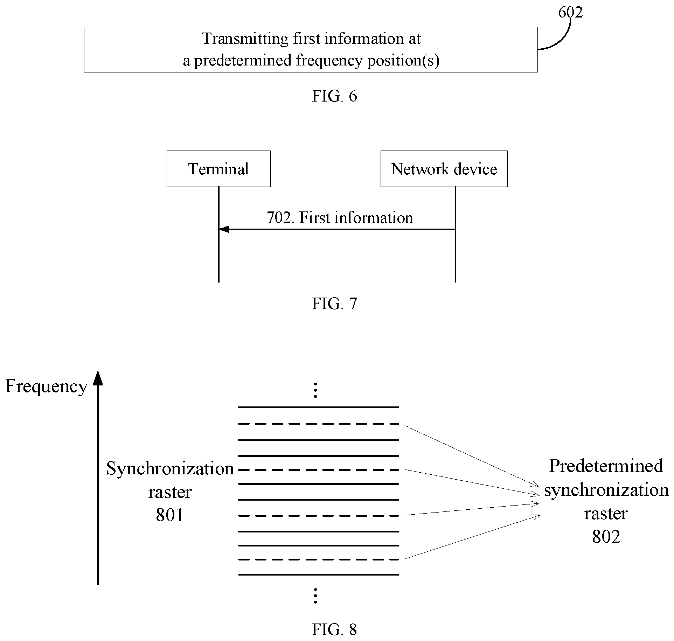

FIG. 6 is a flowchart of a method for cell search according to some embodiments of the present disclosure. The method is performed by a network device. The method includes the following processes.

**In process 602,** first information is transmitted at a predetermined frequency position(s).

The first information is used to indicate a search range of system information, which may also be understood as any of the following expressions: the first information is used to narrow the search range of system information, or the first information is used to locate the search range of system information. The search range of the system information includes at least one of a position of the system information in a frequency domain or a position of the system information in a time domain; that is, the first information is used to instruct the terminal to acquire the system information.

**In** some embodiments, the network device transmits the first information at the predetermined frequency position by broadcasting.

The predetermined frequency position is a frequency position predetermined for searching for the first information. In some embodiments, the information indicating the predetermined frequency position is set in the terminal or in the SIM card of the terminal.

**In** some embodiments, in a case where the first information is used to narrow the search range of the system information, the search range of the system information prior to narrowing is defined by a first frequency position predetermined for searching for the system information. In some embodiments, the first frequency position refers to a frequency position of a synchronization raster. That is, based on the indication of the first information, the search range of the system information indicated by the synchronization raster can be narrowed. For example, the search range of the system information indicated by the first information is smaller than the search range of the system information indicated by the first frequency position, or the first information can indicate the degree or manner in which the search range of the system information indicated by the first frequency position is narrowed.

For the specific contents of the first information being used to narrow the search range of system information, the first information being used to locate the search range of system information, and the first information being used to indicate the search range of system information, reference may be made to the following description, and the embodiments of the present disclosure do not describe these herein.

The system information mentioned above is used for cell search. In some embodiments, the system information includes at least one of PBCH, SS, PSS, SSS, or SSB. SSB includes at least one of a cell-defining SSB or a non-cell-defining SSB. In some embodiments, the first information is different from the system information. In some embodiments, the system information is also referred to as broadcast information, cell search information, a system signal, a broadcast signal, a cell search signal, or the like. The specific name of the system information is not restricted in the embodiments of the present disclosure.

In some embodiments, the first information is used to indicate at least one of: a frequency-domain position of the system information, a time-domain position of the system information, the number of pieces of system information in a system information set, or a communication parameter corresponding to the system information.

The system information set is a set of system information. In some embodiments, the system information is SSB, the system information set is an SS/PBCH burst set, and the system information set is used to realize multi-beam transmission of the system information; that is, each piece of system information corresponds to one beam. The communication parameter corresponding to the system information is used to reflect a relevant parameter adopted for transmitting the system information, for example, a subcarrier spacing corresponding to the system information.

In some embodiments, the first information is a first signal. In some embodiments, the first signal includes at least one of: a synchronization signal, or a reference signal.

In some embodiments, the synchronization signal includes at least one of PSS or SSS. The reference signal includes at least one of a TRS or a DMRS. It should be noted that the type of the first signal is only provided as an example; the first signal can be other types of signals, for example, signals other than the above-mentioned synchronization signal and reference signal, which is not limited in the embodiments of the present disclosure.

In some embodiments, a format of the first signal is a sequence. For example, the first signal adopts a ZC sequence or an m sequence. In some embodiments, the sequence used by the first signal is different from that used by the synchronization signal for cell search.

In some embodiments, a sequence used by the first signal is associated with indication information carried by the first signal. The indication information includes at least one of first indication information, second indication information, third indication information, or fourth indication information. The first indication information is used to indicate the frequency-domain position of the system information, the second indication information is used to indicate the time-domain position of the system information, the third indication information is used to indicate the number of pieces of the system information in the system information set, and the fourth indication information is used to indicate the communication parameter corresponding to the system information.

In some embodiments, the first information is a first channel. In some embodiments, the first channel includes at least one of: a PBCH, a PDCCH, an index channel, or a search channel.

In some embodiments, in a case where the first channel is the PBCH, a format of the first channel is the same as or different from that of the PBCH in the SSB used for cell search. In a case where the first channel is the PDCCH, the format of the first channel is the same as or different from that of the PDCCH, which is mainly used to carry control information in the related art. The first channel carries the indication information carried by the first information by means of the bits carried in the channel. It should be noted that the types of the first channel are only provided as examples; the first channel can be other types of channels, for example, channels other than those illustrated above, such as other channels carrying broadcast, control, system, or other information, which is not limited in the embodiments of the present disclosure.

**Setting for the predetermined frequency position:**

The predetermined frequency position is located within an operating band, and one or more predetermined frequency positions are present within the operating band. In some embodiments, the operating band is a frequency band that the terminal can currently access in the mobile communication system or is supported by a network device, or is a frequency band supported by the current operator of the terminal. The frequency band supported by the operator can be indicated by information carried in the SIM card.

In some embodiments, a plurality of predetermined frequency positions are present within the operating band. The predetermined frequency positions are spaced apart, and frequency-domain spacings between adjacent ones of the predetermined frequency positions are the same. In some embodiments, the frequency-domain spacing is predefined. In some embodiments, the frequency-domain spacing is pre-configured, for example, pre-configured by means of information carried in the SIM card.

In some embodiments, a plurality of predetermined frequency positions are present within the operating band. The predetermined frequency positions are spaced apart, and frequency-domain spacings between at least two sets of adjacent ones of the predetermined frequency positions are different. That is, for a plurality of sets of adjacent ones of the predetermined frequency positions, the frequency-domain spacings corresponding to the plurality of sets of adjacent ones of the predetermined frequency positions may be completely different or partially the same. In some embodiments, the frequency-domain spacing is predefined. In some embodiments, the frequency-domain spacing is pre-configured, for example, pre-configured by means of information carried in the SIM card.

In some embodiments, one predetermined frequency position is present within the operating band.

In some embodiments, the predetermined frequency position includes a portion of a plurality of first frequency positions. The first frequency position is a predetermined frequency position used for searching for the system information. In some embodiments, the first frequency position is associated with the frequency position of the system information. That is, in a case where the first frequency position is detected, the frequency position of the system information can be acquired.

In some embodiments, the first frequency position includes the frequency position of the synchronization raster, and the first frequency position can be regarded as the synchronization raster. It should be noted that the specific name of the first frequency position is not restricted in the embodiments of the present disclosure.

By predetermining a portion of synchronization rasters among all synchronization rasters for the terminal to search for the first information, the predetermined portion of synchronization rasters has a sparser distribution compared to all synchronization rasters. Since the number of the predetermined portion of synchronization rasters is smaller than that of all synchronization rasters, the terminal's search delay and power consumption can be greatly reduced, depending specifically on the spacing of the synchronization rasters.

In some embodiments, the predetermined frequency position includes a frequency position other than the first frequency position. The first frequency position is a predetermined frequency position for searching for system information. In some embodiments, the first frequency position includes the frequency position of the synchronization raster. That is, a frequency position is set outside the synchronization raster for the terminal to search for the first information. In some embodiments, under this circumstance, the predetermined frequency position is indicated by an ARFCN.

**With respect to the indication of the frequency-domain position of the system information by the first information:**

In some embodiments, the first information carries first indication information, wherein the first indication information is used to indicate a frequency-domain position of the system information. In some embodiments, the first indication information is used to indicate that the system information is present in one or more first frequency ranges, or that the system information is not present in the one or more first frequency ranges.

In some embodiments, the first frequency range is associated with the predetermined frequency position, and the terminal can determine the first frequency range based on the predetermined frequency position. In this case, the first indication information does not need to carry information used to indicate the first frequency range, but only carries system information indication information. The system information indication information is used to indicate whether system information is present in the first frequency range. The terminal can determine the first frequency range based on the predetermined frequency position of the currently detected first information, and in combination with the system information indication information, the terminal can determine whether the system information is present in the first frequency range corresponding to the predetermined frequency position of the currently detected first information.

In some embodiments, the first frequency range is a frequency range centered on the predetermined frequency position, and a size of the first frequency range is associated with a first frequency-domain spacing. In some embodiments, the size of the first frequency range is equal to the first frequency-domain spacing. The first frequency-domain spacing is a frequency-domain spacing between the predetermined frequency position and an adjacent frequency position. The adjacent frequency position is a predetermined frequency position adjacent to the predetermined frequency position (the predetermined frequency position of the currently detected first information). In some embodiments, the first indication information carries 1-bit system information indication information, thereby indicating whether the system information is present in the first frequency range determined based on the predetermined frequency position.

In some embodiments, the first indication information includes frequency range indication information, wherein the frequency range indication information is used to indicate the one or more first frequency ranges. In some embodiments, the first indication information further includes system information indication information, wherein the system information indication information is used to indicate whether the system information is present in each of the one or more first frequency ranges. In some embodiments, the first frequency range indicated by the frequency range indication information is a frequency range in which the system information is present.

In some embodiments, the frequency range indication information and the system information indication information are implemented as one piece of information. In some embodiments, the frequency range indication information and the system information indication information are set respectively. The first indication information, by carrying a specific number of bits, carries the frequency range indication information and the system information indication information; wherein the number of bits is determined based on the contents of the frequency range indication information and the system information indication information.

In some embodiments, the frequency range indication information is used to indicate the one or more first frequency ranges among a plurality of second frequency ranges. The second frequency ranges are predefined frequency ranges or pre-configured frequency ranges. In some embodiments, a plurality of second frequency ranges are set within the operating band based on a predefined bandwidth, and these second frequency ranges are numbered. The frequency range indication information carried by the first indication information is used to indicate the number(s) of one or more second frequency ranges, thereby acquiring the one or more first frequency ranges. In some embodiments, the second frequency range indicated by the first indication information is the first frequency range in which the system information is present.

In some embodiments, the frequency range indication information is further used to indicate one or more frequency positions in the first frequency range. The one or more frequency positions may be frequency positions in which the system information is present or frequency positions in which the system information is not present, which may specifically depend on the number of bits used by the first indication information carried in the first information. In some embodiments, the bits in the first indication information are used to indicate the number of the second frequency range, as well as the number of the frequency position in the indicated second frequency range. In this case, only a small number of predetermined frequency positions in the operating band need to be searched for the first information to precisely indicate a large number of frequency-domain positions in which the system information is present or not present. For example, one predetermined frequency position is predetermined for searching for the first information, such that the range over which the terminal searches for system information can be further reduced.

**With respect to the indication of the time-domain position of the system information by the first information:**

In some embodiments, the first information carries second indication information, wherein the second indication information is used to indicate a time-domain position of the system information. The terminal can search for the system information based on the time-domain position of the system information, thereby achieving cell search.

In some embodiments, the second indication information is used to indicate a time-domain offset between a time-domain position of the first information and a first time-domain unit. The first time-domain unit is a time-domain unit containing the system information. In some embodiments, the time-domain offset is indicated by bits carried in the second indication information.

In some embodiments, the system information belongs to a system information set; that is, the system information is a collection of a group of system information. In this case, the second indication information is used to indicate the time-domain offset between the time-domain position of the first information and a time-domain unit containing the system information set. In some embodiments, the system information includes SSB, and the system information set includes an SSB set.

In some embodiments, the timing relationship between the time-domain position of the first information and a start position of the time-domain unit containing the first information is predefined. In some embodiments, the timing relationship between the time-domain position of the first information and the start position of the time-domain unit containing the first information is indicated by information carried in the first information. The granularity of the time-domain unit of the first information includes at least one of a radio frame, a half-frame, a subframe, or a time-domain symbol. The terminal obtains time synchronization with the network based on the detected first information, and then, in combination with the time-domain offset indicated by the second indication information, the terminal can determine the first time-domain unit containing the system information. In some embodiments, in a case of periodic transmission of the system information, the time-domain offset is defined as a time-domain offset between the first information and the nearest system information subsequent to the time-domain unit containing the first information.

In some embodiments, the timing relationship between the time-domain position of the system information and a start position of the first time-domain unit is predefined or pre-configured.

In some embodiments, the first time-domain unit containing the system information includes at least one of: a radio frame, a half-frame, a subframe, or a time-domain symbol.

In some embodiments, the second indication information is used to indicate a period of the system information. The terminal, based on the period of the system information, searches for the system information to achieve cell search. In some embodiments, the period of the system information is indicated by bits carried in the second indication information.

In some embodiments, the second indication information is used to indicate a first time-domain unit containing the system information. That is, the second indication information is used to directly indicate the position of the first time-domain unit. In some embodiments, the position of the first time-domain unit is indicated by bits carried in the second indication information. For the specific description of the first time-domain unit, reference may be made to the foregoing content, which is not elaborated herein in the embodiments of the present disclosure. In some embodiments, in the NR system, the SSB is located within the time range of the half-frame of a radio frame, which may be the first or second half-frame, and the second indication information can directly indicate the half-frame containing the SSB.

**With respect to the indication of other information by the first information:**

In some embodiments, the first information carries third indication information, wherein the third indication information is used to indicate the number of pieces of the system information in a system information set. In some embodiments, the third indication information is further used to indicate a position, within the system information set, of system information that is actually transmitted in the system information set.

In some embodiments, the system information is SSB, the system information set is an SS/PBCH burst set, and the system information set is used to realize multi-beam transmission of the system information; that is, each piece of system information corresponds to one beam.

In some embodiments, the first information carries fourth indication information, wherein the fourth indication information is used to indicate a communication parameter corresponding to the system information. The communication parameter corresponding to the system information is used to reflect a relevant parameter adopted for transmitting the system information. In some embodiments, the communication parameter includes a subcarrier spacing.

It should be noted that the first information may carry one or more of the first indication information, the second indication information, the third indication information, and the fourth indication information. Moreover, each or a portion of the first indication information, the second indication information, the third indication information, and the fourth indication information may be carried in different first information.

In summary, in the method according to the embodiments, the first information is transmitted at the predetermined frequency position, and the terminal acquires the first information by searching and acquires the search range of the system information used for cell search based on the indication of the first information, thereby enhancing the cell search process. The terminal can be enabled to acquire the search range of the system information, such as at least one of a frequency-domain range or a time-domain range of the system information, by searching only at a small number of predetermined frequency positions. Therefore, blind search during the terminal's system information acquisition process can be reduced, thus decreasing the delay of cell search, enabling fast cell search, and simultaneously reducing the power consumption of the terminal.

FIG. 7 is a flowchart of a method for cell search according to some embodiments of the present disclosure. The method is applicable to the communication system illustrated in FIG. 4. The method includes the following processes.

**In process 702,** the terminal searches at predetermined frequency positions for first information transmitted by the network device.

The first information is used to indicate a search range of system information, which may also be understood as any of the following expressions: the first information is used to narrow the search range of the system information, or the first information is used to locate the search range of the system information. The search range of the system information includes at least one of a position of the system information in a frequency domain or a position of the system information in a time domain; that is, the first information is used to instruct the terminal to acquire the system information.

In some embodiments, the network device transmits the first information at the predetermined frequency position by broadcasting.

The predetermined frequency position is a frequency position predetermined for searching for the first information. In some embodiments, the information indicating the predetermined frequency position is set in the terminal or in the SIM card of the terminal.

In some embodiments, in a case where the first information is used to narrow the search range of the system information, the search range of the system information prior to narrowing is defined by a first frequency position predetermined for searching for the system information. In some embodiments, the first frequency position refers to a frequency position of a synchronization raster. That is, based on the indication of the first information, the search range of the system information indicated by the synchronization raster can be narrowed. For example, the search range of the system information indicated by the first information is smaller than the search range of the system information indicated by the first frequency position, or the first information can indicate the degree or manner in which the search range of the system information indicated by the first frequency position is narrowed.

For the specific contents of the first information being used to narrow the search range of system information, the first information being used to locate the search range of system information, and the first information being used to indicate the search range of system information, reference may be made to the following description, and the embodiments of the present disclosure do not describe these herein.

The system information mentioned above is used for cell search. In some embodiments, the system information includes at least one of PBCH, SS, PSS, SSS, or SSB. SSB includes at least one of a cell-defining SSB or a non-cell-defining SSB. In some embodiments, the first information is different from the system information. In some embodiments, the system information is also referred to as broadcast information, cell search information, a system signal, a broadcast signal, a cell search signal, or the like. The specific name of the system information is not restricted in the embodiments of the present disclosure.

In some embodiments, the first information is used to indicate at least one of: a frequency-domain position of the system information, a time-domain position of the system information, the number of pieces of the system information in the system information set, or a communication parameter corresponding to the system information.

The system information set is a set of system information. In some embodiments, the system information is SSB, the system information set is an SS/PBCH burst set, and the system information set is used to realize multi-beam transmission of the system information; that is, each piece of system information corresponds to one beam. The communication parameter corresponding to the system information is used to reflect a relevant parameter adopted for transmitting the system information, for example, a subcarrier spacing corresponding to the system information.

In some embodiments, the first information is a first signal. In some embodiments, the first signal includes at least one of: a synchronization signal, or a reference signal.

In some embodiments, the synchronization signal includes at least one of PSS or SSS. The reference signal includes at least one of a TRS or a DMRS. It should be noted that the type of the first signal is only provided as an example; the first signal can be other types of signals, for example, signals other than the above-mentioned synchronization signal and reference signal, which is not limited in the embodiments of the present disclosure.

In some embodiments, a format of the first signal is a sequence. For example, the first signal adopts a ZC sequence or an m sequence. In some embodiments, the sequence used by the first signal is different from that used by the synchronization signal for cell search.

In some embodiments, a sequence used by the first signal is associated with indication information carried by the first signal. The indication information includes at least one of first indication information, second indication information, third indication information, or fourth indication information. The first indication information is used to indicate the frequency-domain position of the system information, the second indication information is used to indicate the time-domain position of the system information, the third indication information is used to indicate the number of pieces of the system information in the system information set, and the fourth indication information is used to indicate the communication parameter corresponding to the system information.

In some embodiments, the first information is a first channel. In some embodiments, the first channel includes at least one of: a PBCH, a PDCCH, an index channel, or a search channel.

In some embodiments, in a case where the first channel is the PBCH, a format of the first channel is the same as or different from that of the PBCH in the SSB used for cell search. In a case where the first channel is the PDCCH, the format of the first channel is the same as or different from that of the PDCCH, which is mainly used to carry control information in the related art. The first channel carries the indication information carried by the first information by means of the bits carried in the channel. It should be noted that the types of the first channel are only provided as examples; the first channel can be other types of channels, for example, channels other than those illustrated above, such as other channels carrying broadcast, control, system, or other information, which is not limited in the embodiments of the present disclosure.

**Setting for the predetermined frequency position:**

The predetermined frequency position is located within an operating band, and one or more predetermined frequency positions are present within the operating band. In some embodiments, the operating band is a frequency band that the terminal can currently access in the mobile communication system or is supported by a network device, or is a frequency band supported by the current operator of the terminal. The frequency band supported by the operator can be indicated by information carried in the SIM card.

In some embodiments, a plurality of predetermined frequency positions are present within the operating band. The predetermined frequency positions are spaced apart, and frequency-domain spacings between adjacent ones of the predetermined frequency positions are the same. In some embodiments, the frequency-domain spacing is predefined. In some embodiments, the frequency-domain spacing is pre-configured, for example, pre-configured by means of information carried in the SIM card.

In some embodiments, a plurality of predetermined frequency positions are present within the operating band. The predetermined frequency positions are spaced apart, and frequency-domain spacings between at least two sets of adjacent ones of the predetermined frequency positions are different. That is, for a plurality of sets of adjacent ones of the predetermined frequency positions, the frequency-domain spacings corresponding to the plurality of sets of adjacent ones of the predetermined frequency positions may be completely different or partially the same. In some embodiments, the frequency-domain spacing is predefined. In some embodiments, the frequency-domain spacing is pre-configured, for example, pre-configured by means of information carried in the SIM card.

In some embodiments, one predetermined frequency position is present within the operating band.

In some embodiments, the predetermined frequency position includes a portion of a plurality of first frequency positions. The first frequency position is a predetermined frequency position used for searching for the system information. In some embodiments, the first frequency position is associated with the frequency position of the system information. That is, in a case where the first frequency position is detected, the frequency position of the system information can be acquired.

In some embodiments, the first frequency position includes a frequency position of a synchronization raster, and the first frequency position can be regarded as the synchronization raster. It should be noted that the specific name of the first frequency position is not restricted in the embodiments of the present disclosure.

By predetermining a portion of synchronization rasters among all synchronization rasters for the terminal to search for the first information, the predetermined portion of synchronization rasters has a sparser distribution compared to all synchronization rasters. Since the number of the predetermined portion of synchronization rasters is smaller than that of all synchronization rasters, the terminal's search delay and power consumption can be greatly reduced, depending specifically on the spacing of the synchronization rasters.

In some embodiments, the predetermined frequency position includes a frequency position other than the first frequency position. The first frequency position is a predetermined frequency position for searching for system information. In some embodiments, the first frequency position includes the frequency position of the synchronization raster. That is, the frequency position is set outside the synchronization raster for the terminal to search for the first information. In some embodiments, under this circumstance, the predetermined frequency position is indicated by an ARFCN.

In some embodiments, FIG. 8 is a schematic diagram of a predetermined frequency position according to some embodiments of the present disclosure. As illustrated in FIG. 8, in the synchronization rasters 801 of the operating band, a portion of synchronization rasters 802 is predetermined. In a case of performing a cell search, the terminal first searches for the first information on the predetermined synchronization rasters 802. For example, one synchronization raster 801 out of every three synchronization rasters 801 among all synchronization rasters 801 is selected as a predetermined synchronization raster 802.

**With respect to the carrying of first indication information by the first information:**

In some embodiments, the first information carries first indication information, wherein the first indication information is used to indicate a frequency-domain position of the system information. In some embodiments, the first indication information is used to indicate that the system information is present in one or more first frequency ranges, or that the system information is not present in the one or more first frequency ranges.

In some embodiments, the first frequency range is associated with the predetermined frequency position, and the terminal can determine the first frequency range based on the predetermined frequency position. In this case, the first indication information does not need to carry information used to indicate the first frequency range, but only carries system information indication information. The system information indication information is used to indicate whether the system information is present in the first frequency range. The terminal can determine the first frequency range based on the predetermined frequency position of the currently detected first information, and in combination with the system information indication information, the terminal can determine whether the system information is present in the first frequency range corresponding to the predetermined frequency position of the currently detected first information.

In some embodiments, the first frequency range is a frequency range centered on the predetermined frequency position, and a size of the first frequency range is associated with a first frequency-domain spacing. In some embodiments, the size of the first frequency range is equal to the first frequency-domain spacing. The first frequency-domain spacing is a frequency-domain spacing between the predetermined frequency position and an adjacent frequency position. The adjacent frequency position is a predetermined frequency position adjacent to the predetermined frequency position (the predetermined frequency position of the currently detected first information). In some embodiments, the first indication information carries 1-bit system information indication information, thereby indicating whether the system information is present in the first frequency range determined based on the predetermined frequency position.

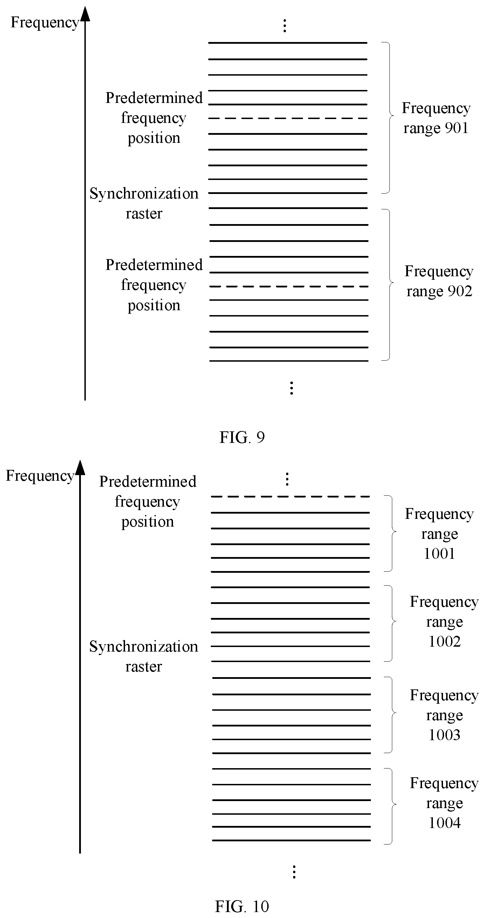

In some embodiments, FIG. 9 is a schematic diagram of a first frequency range according to some embodiments of the present disclosure. As illustrated in FIG. 9, the first information in the frequency range 901 can indicate whether the system information is present in the frequency range 901 centered on the predetermined frequency position where the first information is located. The first information in the frequency range 902 can indicate whether the system information is present in the frequency range 902 centered on the predetermined frequency position where the first information is located. In some embodiments, the frequency range 901 includes ten synchronization raster positions. In a case where the frequency position where the first information in the frequency range 901 is located is also a synchronization raster, then the frequency range 901 further includes this synchronization raster position, that is, a total of 11 synchronization raster positions.

In some embodiments, the first indication information includes frequency range indication information, wherein the frequency range indication information is used to indicate the one or more first frequency ranges. In some embodiments, the first indication information further includes system information indication information, wherein the system information indication information is used to indicate whether the system information is present in each of the one or more first frequency ranges. In some embodiments, the first frequency range indicated by the frequency range indication information is the frequency range in which the system information is present.

In some embodiments, the frequency range indication information and the system information indication information are implemented as one piece of information. In some embodiments, the frequency range indication information and the system information indication information are set respectively. The first indication information, by carrying a specific number of bits, carries the frequency range indication information and the system information indication information; wherein the number of bits is determined based on the contents of the frequency range indication information and the system information indication information.

In some embodiments, the frequency range indication information is used to indicate the one or more first frequency ranges among a plurality of second frequency ranges. The second frequency ranges are predefined frequency ranges or pre-configured frequency ranges. In some embodiments, a plurality of second frequency ranges are set within the operating band based on a predefined bandwidth, and these second frequency ranges are numbered. The frequency range indication information carried by the first indication information is used to indicate the number(s) of one or more second frequency ranges, thereby acquiring one or more first frequency ranges. In some embodiments, the second frequency range indicated by the first indication information is the first frequency range in which the system information is present.

In some embodiments, the frequency range indication information is further used to indicate one or more frequency positions in the first frequency range. The one or more frequency positions may be frequency positions in which the system information is present or frequency positions in which the system information is not present, which may specifically depend on the number of bits used by the first indication information carried in the first information. In some embodiments, the bits in the first indication information are used to indicate the number of the second frequency range, as well as the number of the frequency position in the indicated second frequency range. In this case, only a small number of predetermined frequency positions in the operating band need to be searched for the first information to precisely indicate a large number of frequency-domain positions in which the system information is present or is not present. For example, one predetermined frequency position is predetermined for searching for the first information, such that the range over which the terminal searches for system information can be further reduced.

In some embodiments, FIG. 10 is a schematic diagram of a first frequency range according to some embodiments of the present disclosure. As illustrated in FIG. 10, the operating band includes a plurality of frequency ranges, specifically, frequency range 1001 to frequency range 1004. The first information located at a predetermined frequency position may indicate one or more of frequency range 1001 to frequency range 1004 as a first frequency range, and indicate whether the system information is present in the first frequency range. Furthermore, the first information may further indicate, for each first frequency range, whether the system information is present at a frequency position in the first frequency range, enabling the terminal to quickly search for system information and thereby completing the cell search. The frequency position of the first information is predetermined, but the frequency position may not necessarily be associated with the positions of frequency range 1001 to frequency range 1004. FIG. 10 illustrates an example where the predetermined frequency position of the first information is at the 1st synchronization raster in the frequency range 1001.

**With respect to the carrying of second indication information by the first information:**

In some embodiments, the first information carries second indication information, wherein the second indication information is used to indicate a time-domain position of the system information. The terminal can search for the system information based on the time-domain position of the system information, thereby achieving cell search.

In some embodiments, the second indication information is used to indicate a time-domain offset between a time-domain position of the first information and a first time-domain unit. The first time-domain unit is a time-domain unit containing the system information. In some embodiments, the time-domain offset is indicated by bits carried in the second indication information.

In some embodiments, the system information belongs to a system information set; that is, the system information is a collection of a group of system information. In this case, the second indication information is used to indicate a time-domain offset between the time-domain position of the first information and a time-domain unit containing the system information set. In some embodiments, the system information includes SSB, and the system information set includes an SSB set.

In some embodiments, the timing relationship between the time-domain position of the first information and the start position of the time-domain unit containing the first information is predefined. In some embodiments, the timing relationship between the time-domain position of the first information and the start position of the time-domain unit containing the first information is indicated by information carried in the first information. The granularity of the time-domain unit of the first information includes at least one of a radio frame, a half-frame, a subframe, or a time-domain symbol. The terminal obtains time synchronization with the network based on the detected first information, and then, in combination with the time-domain offset indicated by the second indication information, the terminal can determine the first time-domain unit containing the system information. In some embodiments, in a case of periodic transmission of the system information, the time-domain offset is defined as the time-domain offset between the first information and the nearest system information subsequent to the time-domain unit containing the first information.

In some embodiments, the timing relationship between the time-domain position of the system information and a start position of the first time-domain unit is predefined or pre-configured.

In some embodiments, the first time-domain unit containing the system information includes at least one of: a radio frame, a half-frame, a subframe, or a time-domain symbol.

In some embodiments, the second indication information is used to indicate a period of the system information. The terminal, based on the period of the system information, searches for the system information to achieve cell search. In some embodiments, the period of the system information is indicated by bits carried in the second indication information.

In some embodiments, the second indication information is used to indicate a first time-domain unit containing the system information. That is, the second indication information is used to directly indicate the position of the first time-domain unit. In some embodiments, the position of the first time-domain unit is indicated by bits carried in the second indication information. For the specific description of the first time-domain unit, reference may be made to the foregoing content, which is not elaborated herein in the embodiments of the present disclosure. In some embodiments, in the NR system, the SSB is located within the time range of the half-frame of a radio frame, which may be the first or second half-frame, and the second indication information can directly indicate the half-frame containing the SSB.

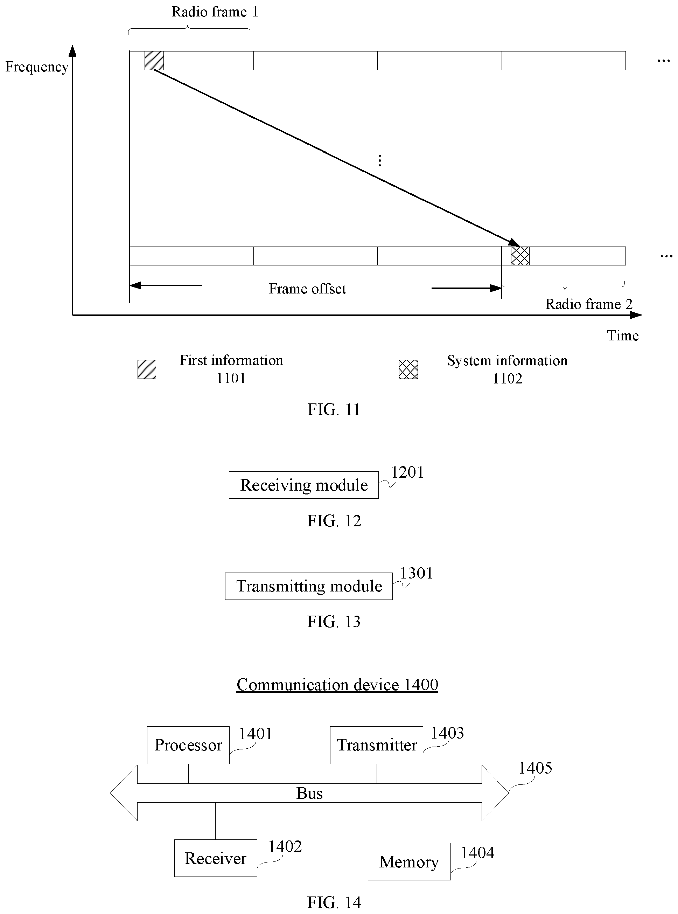

In some embodiments, FIG. 11 is a schematic diagram of time domains of first information and system information according to some embodiments of the present disclosure. As illustrated in FIG. 11, the first information 1101 is located in the radio frame 1, and the time unit containing the first information 1101 has a predefined timing relationship with the start position of the radio frame 1. The second indication information carried by the first information 1101 is used to indicate a frame offset. The frame offset is an offset between the radio frame 1 containing the first information 1101 and the radio frame 2 containing the system information 1102. The time unit containing the system information 1102 has a predefined timing relationship with the start position of the radio frame 2. Therefore, the terminal can acquire the time information of the system information 1102.

**With respect to the carrying of other indication information by the first information:**

In some embodiments, the first information carries third indication information, wherein the third indication information is used to indicate the number of pieces of the system information in a system information set. In some embodiments, the third indication information is further used to indicate a position, within the system information set, of system information that is actually transmitted in the system information set.

In some embodiments, the system information is SSB, the system information set is an SS/PBCH burst set, and the system information set is used to realize multi-beam transmission of the system information; that is, each piece of system information corresponds to one beam.

In some embodiments, the first information carries fourth indication information, wherein the fourth indication information is used to indicate a communication parameter corresponding to the system information. The communication parameter corresponding to the system information is used to reflect a relevant parameter adopted for transmitting the system information. In some embodiments, the communication parameter includes a subcarrier spacing.

In some embodiments, the first information carries one or more of the first indication information, the second indication information, the third indication information, and the fourth indication information. For example, the first information carries the first indication information; the first information carries the second indication information; the first information carries the third indication information; the first information carries the fourth indication information; the first information carries the first indication information and the second indication information; the first information carries the first indication information and the third indication information; the first information carries the first indication information and the fourth indication information; the first information carries the second indication information and the third indication information; the first information carries the second indication information and the fourth indication information; the first information carries the third indication information and the fourth indication information; the first information carries the first indication information, the second indication information, and the third indication information; the first information carries the first indication information, the third indication information, and the fourth indication information; the first information carries the second indication information, the third indication information, and the fourth indication information; or the first information carries the first indication information, the second indication information, the third indication information, and the fourth indication information.

In some embodiments, each or a portion of the first indication information, the second indication information, the third indication information, and the fourth indication information is carried in different first information.

It should be noted that the method according to the embodiments of the present disclosure is applicable to LTE systems and NR systems. The method according to the embodiments of the present disclosure is also applicable to subsequent evolution systems of the above mobile communication system, such as 6G. In addition, in a case of applying the method according to the embodiments of the present disclosure in the above mobile communication system, the method can be applied to a specified frequency band, a specified terminal, a specified terminal group, a specified terminal type, a specified service, or a specified subsystem. For example, in mobile communication information, the method according to the embodiments of the present disclosure is only applied to a terminal with a power-saving requirement, or, for the subsystems constituting the mobile communication system, the method according to the embodiments of the present disclosure is only applied to a specified subsystem among the subsystems.

In summary, in the method according to the embodiments, the first information is transmitted at the predetermined frequency position, and the terminal acquires the first information by searching and acquires the search range of the system information used for cell search based on the indication of the first information, thereby enhancing the cell search process. The terminal can be enabled to acquire the search range of the system information, such as at least one of a frequency-domain range or a time-domain range of the system information, by searching only at a small number of predetermined frequency positions. Therefore, blind search during the terminal's system information acquisition process can be reduced, thus decreasing the delay of cell search based on the system information, enabling fast cell search, and simultaneously reducing the power consumption of the terminal.

In the method according to the embodiments, the predetermined frequency positions are spaced apart, such that the number of predetermined frequency positions can be reduced, thereby improving the efficiency of terminal searching. By selecting a portion of the first frequency positions as predetermined frequency positions, compared to searching for system information using the first frequency positions, the speed of searching for system information can be increased, and the delay can be reduced. By configuring a predetermined frequency position outside the first frequency positions, the flexibility in configuring the predetermined frequency position can be improved.

By indicating the frequency-domain position of the system information using the first information, the terminal can precisely locate the position of the system information in the frequency domain. By associating the first frequency range with the predetermined frequency position, the information used to indicate the first frequency range can be reduced. By indicating the first frequency range in a second frequency range, the indication of the first frequency range can be achieved with a small amount of information, and the flexibility of the indication is high. By indicating the frequency position in the first frequency range, the accuracy of searching for system information can be further improved, thereby reducing power consumption and delay during the search.

By indicating the time-domain position of the system information using the second information, the terminal can precisely locate the position of the system information in the time domain. By using a time-domain offset to indicate the time-domain position of the system information, the time-domain position of the system information can be precisely indicated with a small amount of information. By using the period indicating the system information, the terminal can be enabled to locate the system information based on the period. By precisely indicating the time-domain unit of the system information, the terminal can be enabled to quickly and precisely locate the time-domain position of the system information.

By indicating relevant information of the system information set to which the system information belongs using the third information, the terminal can be enabled to acquire relevant information of the system information set prior to detecting the cell, thereby improving system efficiency. By indicating the communication parameter corresponding to the system information using the fourth information, the terminal can be enabled to search for the system information based on the communication parameter, which helps improve search efficiency.

Implementing the first information by means of a signal or channel can improve the design flexibility of the first information. By using the sequence employed by the first information to implicitly indicate the information indicated by the first information, system efficiency can be improved.

It should be noted that the sequence of the method processes provided in the embodiments of the present disclosure can be appropriately adjusted, and the processes can be increased or decreased based on the situation, and different processes can be freely combined to form a new embodiment. Any variations of the method that may be envisaged by those skilled in the art within the technical scope disclosed herein also fall within the protection scope of the present disclosure and thus are not described herein. Moreover, the order of the different cases as described above does not have a preferred meaning, but is merely for the convenience of description.

FIG. 12 is a block diagram of an apparatus for cell search according to some embodiments of the present disclosure. The apparatus can be implemented as a terminal or as a part of a terminal through software, hardware, or a combination of both. The apparatus includes a receiving module 1201.

The receiving module 1201 is configured to search for first information at a predetermined frequency position(s). The first information is used to indicate a search range of system information, wherein the system information is used for cell search.

The first information is used to indicate a search range of system information, which may also be understood as any of the following expressions: the first information is used to narrow the search range of system information, or the first information is used to locate the search range of system information. The search range of the system information includes at least one of a position of the system information in a frequency domain or a position in a time domain; that is, the first information is used to instruct the terminal to acquire the system information. The predetermined frequency position is a frequency position predetermined for searching for the first information. In some embodiments, the information indicating the predetermined frequency position is set in the terminal or in the SIM card of the terminal.

In some embodiments, in a case where the first information is used to narrow the search range of system information, the search range of the system information prior to narrowing is defined by a first frequency position predetermined for searching for the system information. In some embodiments, the first frequency position refers to a frequency position of a synchronization raster. That is, based on the indication of the first information, the search range of the system information indicated by the synchronization raster can be narrowed. For example, the search range of the system information indicated by the first information is smaller than the search range of the system information indicated by the first frequency position, or the first information can indicate the degree or manner in which the search range of the system information indicated by the first frequency position is narrowed.

For the specific contents of the first information being used to narrow the search range of system information, the first information being used to locate the search range of system information, and the first information being used to indicate the search range of system information, reference may be made to the following description, and the embodiments of the present disclosure do not describe these herein.

The system information mentioned above is used for cell search. In some embodiments, the system information includes at least one of PBCH, SS, PSS, SSS, or SSB. SSB includes at least one of a cell-defining SSB or a non-cell-defining SSB. In some embodiments, the first information is different from the system information. In some embodiments, the system information is also referred to as broadcast information, cell search information, a system signal, a broadcast signal, a cell search signal, or the like. The specific name of the system information is not restricted in the embodiments of the present disclosure.

In some embodiments, the first information is used to indicate at least one of: a frequency-domain position of the system information, a time-domain position of the system information, the number of pieces of the system information in the system information set, or a communication parameter corresponding to the system information.

The system information set is a set of system information. In some embodiments, the system information is SSB, the system information set is an SS/PBCH burst set, and the system information set is used to realize multi-beam transmission of the system information; that is, each piece of system information corresponds to one beam. The communication parameter corresponding to the system information is used to reflect a relevant parameter adopted for transmitting the system information, for example, a subcarrier spacing corresponding to the system information.

In some embodiments, the first information is a first signal. In some embodiments, the first signal includes at least one of: a synchronization signal, or a reference signal.

In some embodiments, the synchronization signal includes at least one of PSS or SSS. The reference signal includes at least one of a TRS or a DMRS. It should be noted that the type of the first signal is only provided as an example; the first signal can be other types of signals, for example, signals other than the above-mentioned synchronization signal and reference signal, which is not limited in the embodiments of the present disclosure.

In some embodiments, a format of the first signal is a sequence. For example, the first signal adopts a ZC sequence or an m sequence. In some embodiments, the sequence used by the first signal is different from that used by the synchronization signal for cell search.

In some embodiments, a sequence used by the first signal is associated with indication information carried by the first signal. The indication information includes at least one of first indication information, second indication information, third indication information, or fourth indication information. The first indication information is used to indicate the frequency-domain position of the system information, the second indication information is used to indicate the time-domain position of the system information, the third indication information is used to indicate the number of pieces of the system information in the system information set, and the fourth indication information is used to indicate the communication parameter corresponding to the system information.

In some embodiments, the first information is a first channel. In some embodiments, the first channel includes at least one of: a PBCH, a PDCCH, an index channel, or a search channel.

In some embodiments, in a case where the first channel is the PBCH, the format of the first channel is the same as or different from that of the PBCH in the SSB used for cell search. In a case where the first channel is the PDCCH, the format of the first channel is the same as or different from that of the PDCCH, which is mainly used to carry control information in the related art. The first channel carries the indication information carried by the first information by means of the bits carried in the channel. It should be noted that the types of the first channel are only provided as examples; the first channel can be other types of channels, for example, channels other than those illustrated above, such as other channels carrying broadcast, control, system, or other information, which is not limited in the embodiments of the present disclosure.

The predetermined frequency position is located within an operating band, and one or more predetermined frequency positions are present within the operating band. In some embodiments, the operating band is a frequency band that the terminal can currently access in the mobile communication system or is supported by a network device, or is a frequency band supported by the current operator of the terminal. The frequency band supported by the operator can be indicated by information carried in the SIM card.

In some embodiments, the predetermined frequency positions are spaced apart, and frequency-domain spacings between adjacent ones of the predetermined frequency positions are the same. In some embodiments, the frequency-domain spacing is predefined. In some embodiments, the frequency-domain spacing is pre-configured, for example, pre-configured by means of information carried in the SIM card.

In some embodiments, the predetermined frequency positions are spaced apart, and frequency-domain spacings between at least two sets of adjacent ones of the predetermined frequency positions are different. That is, for a plurality of sets of adjacent ones of the predetermined frequency positions, the frequency-domain spacings corresponding to the plurality of sets of adjacent ones of the predetermined frequency positions may be completely different or partially the same. In some embodiments, the frequency-domain spacing is predefined. In some embodiments, the frequency-domain spacing is pre-configured, for example, pre-configured by means of information carried in the SIM card.

In some embodiments, one predetermined frequency position is present within the operating band.

In some embodiments, the predetermined frequency position includes a portion of a plurality of first frequency positions. The first frequency position is a predetermined frequency position used for searching for the system information. In some embodiments, the first frequency position is associated with the frequency position of the system information. That is, in a case where the first frequency position is detected, the frequency position of the system information can be acquired.

In some embodiments, the first frequency position includes a frequency position of a synchronization raster, and the first frequency position can be regarded as the synchronization raster. It should be noted that the specific name of the first frequency position is not restricted in the embodiments of the present disclosure.

By predetermining a portion of synchronization rasters among all synchronization rasters for the terminal to search for the first information, the predetermined portion of synchronization rasters has a sparser distribution compared to all synchronization rasters. Since the number of the predetermined portion of synchronization rasters is smaller than that of all synchronization rasters, the terminal's search delay and power consumption can be greatly reduced, depending specifically on the spacing of the synchronization rasters.

In some embodiments, the predetermined frequency position includes a frequency position other than the first frequency position. The first frequency position is a predetermined frequency position for searching for system information. In some embodiments, the first frequency position includes the frequency position of the synchronization raster. That is, a frequency position is set outside the synchronization raster for the terminal to search for the first information. In some embodiments, under this circumstance, the predetermined frequency position is indicated by an ARFCN.

In some embodiments, the first information carries first indication information, wherein the first indication information is used to indicate a frequency-domain position of the system information.

In some embodiments, the first indication information is used to indicate that the system information is present in one or more first frequency ranges, or that the system information is not present in the one or more first frequency ranges.

In some embodiments, the first frequency range is associated with the predetermined frequency position. In this case, the first indication information does not need to carry information used to indicate the first frequency range, but only carries system information indication information. The system information indication information is used to indicate whether the system information is present in the first frequency range. The terminal can determine the first frequency range based on the predetermined frequency position of the currently detected first information, and in combination with the system information indication information, the terminal can determine whether the system information is present in the first frequency range corresponding to the predetermined frequency position of the currently detected first information.

In some embodiments, the first frequency range is a frequency range centered on the predetermined frequency position, and a size of the first frequency range is associated with a first frequency-domain spacing. The first frequency-domain spacing is a frequency-domain spacing between the predetermined frequency position and an adjacent frequency position, wherein the adjacent frequency position is a predetermined frequency position adjacent to the predetermined frequency position. In some embodiments, the first indication information carries 1-bit system information indication information, thereby indicating whether the system information is present in the first frequency range determined based on the predetermined frequency position.

In some embodiments, the first indication information includes frequency range indication information. The frequency range indication information is used to indicate the one or more first frequency ranges. In some embodiments, the first indication information further includes system information indication information, wherein the system information indication information is used to indicate whether the system information is present in each of the one or more first frequency ranges. In some embodiments, the first frequency range indicated by the frequency range indication information is the frequency range in which the system information is present.

In some embodiments, the frequency range indication information and the system information indication information are implemented as one piece of information. In some embodiments, the frequency range indication information and the system information indication information are set respectively. The first indication information, by carrying a specific number of bits, carries the frequency range indication information and the system information indication information; wherein the number of bits is determined based on the contents of the frequency range indication information and the system information indication information.

In some embodiments, the frequency range indication information is used to indicate the one or more first frequency ranges among a plurality of second frequency ranges. The second frequency ranges are predefined frequency ranges or pre-configured frequency ranges. In some embodiments, a plurality of second frequency ranges are set within the operating band based on a predefined bandwidth, and these second frequency ranges are numbered. The frequency range indication information carried by the first indication information is used to indicate the number(s) of one or more second frequency ranges, thereby acquiring one or more first frequency ranges. In some embodiments, the second frequency range indicated by the first indication information is the first frequency range in which the system information is present.

In some embodiments, the frequency range indication information is further used to indicate one or more frequency positions in the first frequency range. The one or more frequency positions may be frequency positions in which the system information is present or frequency positions in which the system information is not present, which may specifically depend on the number of bits used by the first indication information carried in the first information. In some embodiments, the bits in the first indication information are used to indicate the number of the second frequency range, as well as the number of the frequency position in the indicated second frequency range. In this case, only a small number of predetermined frequency positions in the operating band need to be searched for the first information to precisely indicate a large number of frequency-domain positions in which the system information is present or is not present. For example, one predetermined frequency position is predetermined for searching for the first information, such that the range over which the terminal searches for system information can be further reduced.

In some embodiments, the first information carries second indication information, wherein the second indication information is used to indicate a time-domain position of the system information.

In some embodiments, the second indication information is used to indicate a time-domain offset between a time-domain position of the first information and a first time-domain unit. The first time-domain unit is a time-domain unit containing the system information. In some embodiments, the time-domain offset is indicated by bits carried in the second indication information.

In some embodiments, the system information belongs to a system information set; that is, the system information is a collection of a group of system information. In this case, the second indication information is used to indicate a time-domain offset between the time-domain position of the first information and a time-domain unit containing the system information set. In some embodiments, the system information includes SSB, and the system information set includes an SSB set.

In some embodiments, the timing relationship between the time-domain position of the first information and a start position of the time-domain unit containing the first information is predefined. In some embodiments, the timing relationship between the time-domain position of the first information and the start position of the time-domain unit containing the first information is indicated by information carried in the first information. The granularity of the time-domain unit of the first information includes at least one of a radio frame, a half-frame, a subframe, or a time-domain symbol. The terminal obtains time synchronization with the network based on the detected first information, and then, in combination with the time-domain offset indicated by the second indication information, the terminal can determine the first time-domain unit containing the system information. In some embodiments, in a case of periodic transmission of the system information, the time-domain offset is defined as a time-domain offset between the first information and the nearest system information subsequent to the time-domain unit containing the first information.

In some embodiments, a timing relationship between the time-domain position of the system information and a start position of the first time-domain unit is predefined or pre-configured.

In some embodiments, the first time-domain unit includes at least one of: a radio frame, a half-frame, a subframe, or a time-domain symbol.

In some embodiments, the second indication information is used to indicate a period of the system information. The terminal, based on the period of the system information, searches for the system information to achieve cell search. In some embodiments, the period of the system information is indicated by bits carried in the second indication information.

In some embodiments, the second indication information is used to indicate a first time-domain unit containing the system information. That is, the second indication information is used to directly indicate the position of the first time-domain unit. In some embodiments, the position of the first time-domain unit is indicated by bits carried in the second indication information. For the specific description of the first time-domain unit, reference may be made to the foregoing content, which is not elaborated herein in the embodiments of the present disclosure. In some embodiments, in the NR system, the SSB is located within the time range of the half-frame of a radio frame, which may be the first or second half-frame, and the second indication information can directly indicate the half-frame containing the SSB.

In some embodiments, the first information carries third indication information, wherein the third indication information is used to indicate the number of pieces of the system information in a system information set. In some embodiments, the third indication information is further used to indicate a position, within the system information set, of system information that is actually transmitted in the system information set.

In some embodiments, the system information is SSB, the system information set is an SS/PBCH burst set, and the system information set is used to realize multi-beam transmission of the system information; that is, each piece of system information corresponds to one beam.

In some embodiments, the first information carries fourth indication information, wherein the fourth indication information is used to indicate a communication parameter corresponding to the system information. The communication parameter corresponding to the system information is used to reflect a relevant parameter adopted for transmitting the system information. In some embodiments, the communication parameter includes a subcarrier spacing.

FIG. 13 is a block diagram of an apparatus for cell search according to some embodiments of the present disclosure. The apparatus can be implemented as a network device or as a part of a network device through software, hardware, or a combination of both. The apparatus includes a transmitting module 1301.

The transmitting module 1301 is configured to transmit first information at a predetermined frequency position(s). The first information is used to indicate a search range of system information; wherein the system information is used for cell search.

In some embodiments, the apparatus transmits the first information at the predetermined frequency positions by broadcasting.

The first information is used to indicate a search range of the system information, which may also be understood as any of the following expressions: the first information is used to narrow the search range of the system information, or the first information is used to locate the search range of the system information. The search range of the system information includes at least one of a position of the system information in a frequency domain or a position of the system information in a time domain; that is, the first information is used to instruct the terminal to acquire the system information. The predetermined frequency position is the frequency position predetermined for searching for the first information. In some embodiments, the information indicating the predetermined frequency position is set in the terminal or in the SIM card of the terminal.

In some embodiments, in a case where the first information is used to narrow the search range of the system information, the search range of the system information prior to narrowing is defined by a first frequency position predetermined for searching for the system information. In some embodiments, the first frequency position refers to a frequency position of a synchronization raster. That is, based on the indication of the first information, the search range of the system information indicated by the synchronization raster can be narrowed. For example, the search range of the system information indicated by the first information is smaller than the search range of the system information indicated by the first frequency position, or the first information can indicate the degree or manner in which the search range of the system information indicated by the first frequency position is narrowed.

For the specific contents of the first information being used to narrow the search range of system information, the first information being used to locate the search range of system information, and the first information being used to indicate the search range of system information, reference may be made to the following description, and the embodiments of the present disclosure do not describe these herein.

The system information mentioned above is used for cell search. In some embodiments, the system information includes at least one of PBCH, SS, PSS, SSS, or SSB. SSB includes at least one of a cell-defining SSB or a non-cell-defining SSB. In some embodiments, the first information is different from the system information. In some embodiments, the system information is also referred to as broadcast information, cell search information, a system signal, a broadcast signal, a cell search signal, or the like. The specific name of the system information is not restricted in the embodiments of the present disclosure.

In some embodiments, the first information is used to indicate at least one type of the following information: a frequency-domain position of the system information, a time-domain position of the system information, the number of pieces of the system information in a system information set, or a communication parameter corresponding to the system information.

The system information set is a set of system information. In some embodiments, the system information is SSB, the system information set is an SS/PBCH burst set, and the system information set is used to realize multi-beam transmission of the system information; that is, each piece of system information corresponds to one beam. The communication parameter corresponding to the system information is used to reflect a relevant parameter adopted for transmitting the system information, for example, a subcarrier spacing corresponding to the system information.

In some embodiments, the first information is a first signal. In some embodiments, the first signal includes at least one of: a synchronization signal, or a reference signal.

In some embodiments, the synchronization signal includes at least one of PSS or SSS. The reference signal includes at least one of a TRS or a DMRS. It should be noted that the type of the first signal is only provided as an example; the first signal can be other types of signals, for example, signals other than the above-mentioned synchronization signal and reference signal, which is not limited in the embodiments of the present disclosure.

In some embodiments, a format of the first signal is a sequence. For example, the first signal adopts a ZC sequence or an m sequence. In some embodiments, the sequence used by the first signal is different from that used by the synchronization signal for cell search.

In some embodiments, a sequence used by the first signal is associated with indication information carried by the first signal. The indication information includes at least one of first indication information, second indication information, third indication information, or fourth indication information. The first indication information is used to indicate the frequency-domain position of the system information, the second indication information is used to indicate the time-domain position of the system information, the third indication information is used to indicate the number of pieces of the system information in the system information set, and the fourth indication information is used to indicate the communication parameter corresponding to the system information.

In some embodiments, the first information is a first channel. In some embodiments, the first channel includes at least one of: a PBCH, a PDCCH, an index channel, or a search channel.

In some embodiments, in a case where the first channel is the PBCH, the format of the first channel is the same as or different from that of the PBCH in the SSB used for cell search. In a case where the first channel is the PDCCH, the format of the first channel is the same as or different from that of the PDCCH, which is mainly used to carry control information in the related art. The first channel carries the indication information carried by the first information by means of the bits carried in the channel. It should be noted that the types of the first channel are only provided as examples; the first channel can be other types of channels, for example, channels other than those illustrated above, such as other channels carrying broadcast, control, system, or other information, which is not limited in the embodiments of the present disclosure.

The predetermined frequency position is located within an operating band, and one or more predetermined frequency positions are present within the operating band. In some embodiments, the operating band is a frequency band that the terminal can currently access in the mobile communication system or is supported by a network device, or is a frequency band supported by the current operator of the terminal. The frequency band supported by the operator can be indicated by information carried in the SIM card.

In some embodiments, the predetermined frequency positions are spaced apart, and frequency-domain spacings between adjacent ones of the predetermined frequency positions are the same. In some embodiments, the frequency-domain spacing is predefined. In some embodiments, the frequency-domain spacing is pre-configured, for example, pre-configured by means of information carried in the SIM card.

In some embodiments, the predetermined frequency positions are spaced apart, and frequency-domain spacings between at least two sets of adjacent ones of the predetermined frequency positions are different. That is, for a plurality of sets of adjacent ones of the predetermined frequency positions, the frequency-domain spacings corresponding to the plurality of sets of adjacent ones of the predetermined frequency positions may be completely different or partially the same. In some embodiments, the frequency-domain spacing is predefined. In some embodiments, the frequency-domain spacing is pre-configured, for example, pre-configured by means of information carried in the SIM card.

In some embodiments, one predetermined frequency position is present within the operating band.

In some embodiments, the predetermined frequency positions include a portion of a plurality of first frequency positions. The first frequency position is a predetermined frequency position used for searching for the system information. In some embodiments, the first frequency position is associated with the frequency position of the system information. That is, in a case where the first frequency position is detected, the frequency position of the system information can be acquired.

In some embodiments, the first frequency position includes the frequency position of a synchronization raster, and the first frequency position can be regarded as the synchronization raster. It should be noted that the specific name of the first frequency position is not restricted in the embodiments of the present disclosure.

By predetermining a portion of synchronization rasters among all synchronization rasters for the terminal to search for the first information, the predetermined portion of synchronization rasters has a sparser distribution compared to all synchronization rasters. Since the number of the predetermined portion of synchronization rasters is smaller than that of all synchronization rasters, the terminal's search delay and power consumption can be greatly reduced, depending specifically on the spacing of the synchronization rasters.

In some embodiments, the predetermined frequency positions include a frequency position other than the first frequency position. The first frequency position is a predetermined frequency position for searching for system information. In some embodiments, the first frequency position includes the frequency position of the synchronization raster. That is, a frequency position is set outside the synchronization raster for the terminal to search for the first information. In some embodiments, under this circumstance, the predetermined frequency position is indicated by an ARFCN.

In some embodiments, the first information carries first indication information, wherein the first indication information is used to indicate a frequency-domain position of the system information.

In some embodiments, the first indication information is used to indicate that the system information is present in one or more first frequency ranges, or that the system information is not present in the one or more first frequency ranges.

In some embodiments, the first frequency range is associated with the predetermined frequency position. In this case, the first indication information does not need to carry information used to indicate the first frequency range, but only carries system information indication information. The system information indication information is used to indicate whether the system information is present in the first frequency range. The terminal can determine the first frequency range based on the predetermined frequency position of the currently detected first information, and in combination with the system information indication information, the terminal can determine whether the system information is present in the first frequency range corresponding to the predetermined frequency position of the currently detected first information.

In some embodiments, the first frequency range is a frequency range centered on the predetermined frequency position, and a size of the first frequency range is associated with a first frequency-domain spacing. The first frequency-domain spacing is a frequency-domain spacing between the predetermined frequency position and an adjacent frequency position, wherein the adjacent frequency position is a predetermined frequency position adjacent to the predetermined frequency position. In some embodiments, the first indication information carries 1-bit system information indication information, thereby indicating whether the system information is present in the first frequency range determined based on the predetermined frequency position.

In some embodiments, the first indication information includes frequency range indication information. The frequency range indication information is used to indicate the one or more first frequency ranges. In some embodiments, the first indication information further includes system information indication information, wherein the system information indication information is used to indicate whether the system information is present in each of the one or more first frequency ranges. In some embodiments, the first frequency range indicated by the frequency range indication information is a frequency range in which the system information is present.

In some embodiments, the frequency range indication information and the system information indication information are implemented as one piece of information. In some embodiments, the frequency range indication information and the system information indication information are set respectively. The first indication information, by carrying a specific number of bits, carries the frequency range indication information and the system information indication information; wherein the number of bits is determined based on the contents of the frequency range indication information and the system information indication information.

In some embodiments, the frequency range indication information is used to indicate the one or more first frequency ranges among a plurality of second frequency ranges. The second frequency ranges are predefined frequency ranges or pre-configured frequency ranges. In some embodiments, a plurality of second frequency ranges are set within the operating band based on a predefined bandwidth, and these second frequency ranges are numbered. The frequency range indication information carried by the first indication information is used to indicate the number(s) of one or more second frequency ranges, thereby acquiring one or more first frequency ranges. In some embodiments, the second frequency range indicated by the first indication information is the first frequency range in which the system information is present.

In some embodiments, the frequency range indication information is further used to indicate one or more frequency positions in the first frequency range. The one or more frequency positions may be frequency positions in which the system information is present or frequency positions in which the system information is not present, which may specifically depend on the number of bits used by the first indication information carried in the first information. In some embodiments, the bits in the first indication information are used to indicate the number of the second frequency range, as well as the number of the frequency position in the indicated second frequency range. In this case, only a small number of predetermined frequency positions in the operating band need to be searched for the first information to precisely indicate a large number of frequency-domain positions in which system information is present or is not present. For example, one predetermined frequency position is predetermined for searching for the first information, such that the range over which the terminal searches for the system information can be further reduced.

In some embodiments, the first information carries second indication information, wherein the second indication information is used to indicate a time-domain position of the system information.

In some embodiments, the second indication information is used to indicate a time-domain offset between a time-domain position of the first information and a first time-domain unit. The first time-domain unit is a time-domain unit containing the system information. In some embodiments, the time-domain offset is indicated by bits carried in the second indication information.

In some embodiments, the system information belongs to a system information set; that is, the system information is a collection of a group of system information. In this case, the second indication information is used to indicate a time-domain offset between the time-domain position of the first information and a time-domain unit containing the system information set. In some embodiments, the system information includes SSB, and the system information set includes an SSB set.

In some embodiments, a timing relationship between the time-domain position of the first information and a start position of the time-domain unit containing the first information is predefined. In some embodiments, the timing relationship between the time-domain position of the first information and the start position of the time-domain unit containing the first information is indicated by information carried in the first information. The granularity of the time-domain unit of the first information includes at least one of a radio frame, a half-frame, a subframe, or a time-domain symbol. The terminal obtains time synchronization with the network based on the detected first information, and then, in combination with the time-domain offset indicated by the second indication information, the terminal can determine the first time-domain unit containing the system information. In some embodiments, in a case of periodic transmission of the system information, the time-domain offset is defined as a time-domain offset between the first information and the nearest system information subsequent to the time-domain unit containing the first information.

In some embodiments, a timing relationship between the time-domain position of the system information and a start position of the first time-domain unit is predefined or pre-configured.

In some embodiments, the first time-domain unit includes at least one of: a radio frame, a half-frame, a subframe, or a time-domain symbol.

In some embodiments, the second indication information is used to indicate a period of the system information. The terminal, based on the period of the system information, searches for the system information to achieve cell search. In some embodiments, the period of the system information is indicated by bits carried in the second indication information.

In some embodiments, the second indication information is used to indicate a first time-domain unit containing the system information. That is, the second indication information is used to directly indicate the position of the first time-domain unit. In some embodiments, the position of the first time-domain unit is indicated by bits carried in the second indication information. For the specific description of the first time-domain unit, reference may be made to the foregoing content, which is not elaborated herein in the embodiments of the present disclosure. In some embodiments, in the NR system, the SSB is located within the time range of the half-frame of a radio frame, which may be the first or second half-frame, and the second indication information can directly indicate the half-frame containing the SSB.

In some embodiments, the first information carries third indication information, wherein the third indication information is used to indicate the number of pieces of the system information in a system information set. In some embodiments, the third indication information is further used to indicate a position, within the system information set, of system information that is actually transmitted in the system information set.

In some embodiments, the system information is SSB, the system information set is an SS/PBCH burst set, and the system information set is used to realize multi-beam transmission of the system information; that is, each piece of system information corresponds to one beam.

In some embodiments, the first information carries fourth indication information, wherein the fourth indication information is used to indicate a communication parameter corresponding to the system information. The communication parameter corresponding to the system information is used to reflect a relevant parameter adopted for transmitting the system information. In some embodiments, the communication parameter includes a subcarrier spacing.

It should be noted that the apparatus according to the above embodiments, when implementing functions thereof, is illustrated only based on the division of the respective functional modules as described above. In practice, the allocation of the above functions may be carried out by different functional modules based on actual needs; that is, the internal structure of the device may be divided into different functional modules to accomplish all or part of the functions described above.

With regard to the apparatus in the above embodiments, the specific manner in which each module performs the operation has been described in detail in the embodiments associated with the method and will not be described in detail herein.

FIG. 14 is a schematic structural diagram of a communication device (a terminal/a network device) according to some embodiments of the present disclosure. The communication device 1400 includes: a processor 1401, a receiver 1402, a transmitter 1403, a memory 1404, and a bus 1405.

The processor 1401 includes one or more processing cores, and the processor 1401 performs various functional applications and information processing by running software programs and modules.

The receiver 1402 and the transmitter 1403 may be implemented as a communication assembly, wherein the communication assembly may be a communication chip.

The memory 1404 is connected to the processor 1401 via the bus 1405. The memory 1404 is configured to store at least one instruction, and the processor 1401 is configured to execute the at least one instruction to perform the processes in the above method embodiments.

In addition, the memory 1404 may be implemented by any type or combination of volatile or non-volatile storage devices including, but not limited to: a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In a case where the communication device is implemented as a terminal, the processor and the transceiver in the communication device in the embodiments of the present disclosure are implemented together as one communication chip, or the transceiver separately forms a communication chip. The transmitter in the transceiver performs transmitting processes performed by the terminal in any one of the above methods, the receiver in the transceiver performs receiving processes performed by the terminal in any one of the above methods, and the processor performs processes other than the transmitting and receiving processes. Details are not elaborated herein any further.

In a case where the communication device is implemented as a network device, the processor and the transceiver in the communication device in the embodiments of the present disclosure are implemented together as one communication chip, or the transceiver separately forms a communication chip. The transmitter in the transceiver performs transmitting processes performed by the network device in any one of the above methods, the receiver in the transceiver performs receiving processes performed by the network device in any one of the above methods, and the processor performs processes other than the transmitting and receiving processes. Details are not elaborated herein any further.

In some embodiments, a computer-readable storage medium is further provided. The computer-readable storage medium stores at least one instruction, at least one program, a code set, or an instruction set. The at least one instruction, the at least one program, the code set, or the instruction set, when loaded and executed by the processor, causes the processor to perform the method for cell search according to the above method embodiments.

In some embodiments, a chip is further provided. The chip includes one or more programmable logic circuits and/or one or more program instructions. The chip, when running the one or more programmable logic circuits and/or the one or more program instructions on a communication device, causes the communication device to perform the method for cell search according to the above method embodiments.

In some embodiments, a computer program product is further provided. The computer program product, when running on a processor of a computer device, causes the computer device to perform the method for cell search described above.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for cell search, performed by a terminal, the method comprising:
   searching for first information at a predetermined frequency position(s), wherein the first information is used to indicate a search range of system information, wherein the system information is used for cell search.

2. The method according to claim 1, wherein the predetermined frequency positions are spaced apart, and frequency-domain spacings between adjacent ones of the predetermined frequency positions are the same.

3. The method according to claim 1, wherein the predetermined frequency positions are spaced apart, and frequency-domain spacings between at least two sets of adjacent ones of the predetermined frequency positions are different.

4. The method according to any one of claims 1 to 3, wherein the predetermined frequency position comprises a portion of a plurality of first frequency positions, wherein the first frequency positions are predetermined frequency positions used for searching for the system information.

5. The method according to any one of claims 1 to 3, wherein the predetermined frequency position comprises a frequency position other than a first frequency position, wherein the first frequency position is a predetermined frequency position used for searching for the system information.

6. The method according to any one of claims 1 to 5, wherein the first information carries first indication information, wherein the first indication information is used to indicate a frequency-domain position of the system information.

7. The method according to claim 6, wherein the first indication information is used to indicate that the system information is present in one or more first frequency ranges, or that the system information is not present in one or more first frequency ranges.

8. The method according to claim 7, wherein the first frequency range is associated with the predetermined frequency position.

9. The method according to claim 8, wherein the first frequency range is a frequency range centered on the predetermined frequency position, and a size of the first frequency range is associated with a first frequency-domain spacing, wherein the first frequency-domain spacing is a frequency-domain spacing between the predetermined frequency position and an adjacent frequency position, wherein the adjacent frequency position is a predetermined frequency position adjacent to the predetermined frequency position.

10. The method according to claim 7, wherein the first indication information comprises frequency range indication information, wherein the frequency range indication information is used to indicate the one or more first frequency ranges.

11. The method according to claim 10, wherein the frequency range indication information is used to indicate the one or more first frequency ranges among a plurality of second frequency ranges, wherein the plurality of second frequency ranges are predefined frequency ranges or pre-configured frequency ranges.

12. The method according to claim 11, wherein the frequency range indication information is further used to indicate one or more frequency positions in the first frequency range.

13. The method according to any one of claims 1 to 12, wherein the first information carries second indication information, wherein the second indication information is used to indicate a time-domain position of the system information.

14. The method according to claim 13, wherein the second indication information is used to indicate a time-domain offset between a time-domain position of the first information and a first time-domain unit, wherein the first time-domain unit is a time-domain unit containing the system information.

15. The method according to claim 14, wherein a timing relationship between the time-domain position of the system information and a start position of the first time-domain unit is predefined or pre-configured.

16. The method according to claim 14, wherein the first time-domain unit comprises at least one of:

   a radio frame;
   a half-frame;
   a subframe; or
   a time-domain symbol.

17. The method according to claim 13, wherein the second indication information is used to indicate a period of the system information.

18. The method according to claim 13, wherein the second indication information is used to indicate a first time-domain unit containing the system information.

19. The method according to any one of claims 1 to 18, wherein the first information carries third indication information, wherein the third indication information is used to indicate a number of pieces of the system information in a system information set.

20. The method according to claim 19, wherein the third indication information is further used to indicate a position, within the system information set, of system information that is actually transmitted in the system information set.

21. The method according to any one of claims 1 to 20, wherein the first information carries fourth indication information, wherein the fourth indication information is used to indicate a communication parameter corresponding to the system information.

22. The method according to claim 21, wherein the communication parameter comprises a subcarrier spacing.

23. The method according to any one of claims 1 to 22, wherein the first information is a first signal.

24. The method according to claim 23, wherein a sequence used by the first signal is associated with indication information carried by the first signal, wherein the indication information comprises at least one of first indication information, second indication information, third indication information, or fourth indication information,
wherein the first indication information is used to indicate a frequency-domain position of the system information, the second indication information is used to indicate a time-domain position of the system information, the third indication information is used to indicate a number of pieces of the system information in a system information set, and the fourth indication information is used to indicate a communication parameter corresponding to the system information.

25. The method according to claim 23, wherein the first signal comprises at least one of:

a synchronization signal; or
a reference signal.

26. The method according to any one of claims 1 to 25, wherein the first information is a first channel.

27. The method according to claim 26, wherein the first channel comprises at least one of:

a physical broadcast channel (PBCH);
a physical downlink control channel (PDCCH);
an index channel; or
a search channel.

28. A method for cell search, performed by a network device, the method comprising:
transmitting first information at a predetermined frequency position(s), wherein the first information is used to indicate a search range of system information, wherein the system information is used for cell search.

29. The method according to claim 28, wherein the predetermined frequency positions are spaced apart, and frequency-domain spacings between adjacent ones of the predetermined frequency positions are the same.

30. The method according to claim 28, wherein the predetermined frequency positions are spaced apart, and frequency-domain spacings between at least two sets of adjacent ones of the predetermined frequency positions are different.

31. The method according to any one of claims 28 to 30, wherein the predetermined frequency position comprises a portion of a plurality of first frequency positions, wherein the first frequency positions are predetermined frequency positions used for searching for the system information.

32. The method according to any one of claims 28 to 30, wherein the predetermined frequency position comprises a frequency position other than a first frequency position, wherein the first frequency position is a predetermined frequency position used for searching for the system information.

33. The method according to any one of claims 28 to 32, wherein the first information carries first indication information, wherein the first indication information is used to indicate a frequency-domain position of the system information.

34. The method according to claim 33, wherein the first indication information is used to indicate that the system information is present in one or more first frequency ranges, or that the system information is not present in one or more first frequency ranges.

35. The method according to claim 34, wherein the first frequency range is associated with the predetermined frequency position.

36. The method according to claim 35, wherein the first frequency range is a frequency range centered on the predetermined frequency position, and a size of the first frequency range is associated with a first frequency-domain spacing, wherein the first frequency-domain spacing is a frequency-domain spacing between the predetermined frequency position and an adjacent frequency position, wherein the adjacent frequency position is a predetermined frequency position adjacent to the predetermined frequency position.

37. The method according to claim 34, wherein the first indication information comprises frequency range indication information, wherein the frequency range indication information is used to indicate the one or more first frequency ranges.

38. The method according to claim 37, wherein the frequency range indication information is used to indicate the one or more first frequency ranges among a plurality of second frequency ranges, wherein the plurality of second frequency ranges are predefined frequency ranges or pre-configured frequency ranges.

39. The method according to claim 38, wherein the frequency range indication information is further used to indicate one or more frequency positions in the first frequency range.

40. The method according to any one of claims 28 to 39, wherein the first information carries second indication information, wherein the second indication information is used to indicate a time-domain position of the system information.

41. The method according to claim 40, wherein the second indication information is used to indicate a time-domain offset between a time-domain position of the first information and a first time-domain unit, wherein the first time-domain unit is a time-domain unit containing the system information.

42. The method according to claim 41, wherein a timing relationship between the time-domain position of the system information and a start position of the first time-domain unit is predefined or pre-configured.

43. The method according to claim 41, wherein the first time-domain unit comprises at least one of:

    a radio frame;
    a half-frame;
    a subframe; or
    a time-domain symbol.

44. The method according to claim 40, wherein the second indication information is used to indicate a period of the system information.

45. The method according to claim 40, wherein the second indication information is used to indicate a first time-domain unit containing the system information.

46. The method according to any one of claims 28 to 45, wherein the first information carries third indication information, wherein the third indication information is used to indicate a number of pieces of the system information in a system information set.

47. The method according to claim 46, wherein the third indication information is further used to indicate a position, within the system information set, of system information that is actually transmitted in the system information set.

48. The method according to any one of claims 28 to 47, wherein the first information carries fourth indication information, wherein the fourth indication information is used to indicate a communication parameter corresponding to the system information.

49. The method according to claim 48, wherein the communication parameter comprises a subcarrier spacing.

**50.** The method according to any one of claims 28 to 49, wherein the first information is a first signal.

**51.** The method according to claim 50, wherein a sequence used by the first signal is associated with indication information carried by the first signal, wherein the indication information comprises at least one of first indication information, second indication information, third indication information, or fourth indication information;

wherein the first indication information is used to indicate a frequency-domain position of the system information, the second indication information is used to indicate a time-domain position of the system information, the third indication information is used to indicate a number of pieces of the system information in a system information set, and the fourth indication information is used to indicate a communication parameter corresponding to the system information.

**52.** The method according to claim 50, wherein the first signal comprises at least one of:

a synchronization signal; or
a reference signal.

**53.** The method according to any one of claims 28 to 52, wherein the first information is a first channel.

**54.** The method according to claim 53, wherein the first channel comprises at least one of:

a physical broadcast channel (PBCH);
a physical downlink control channel (PDCCH);
an index channel; or
a search channel.

**55.** An apparatus for cell search, comprising:
a receiving module, configured to search for first information at a predetermined frequency position(s), wherein the first information is used to indicate a search range of system information, wherein the system information is used for cell search.

**56.** An apparatus for cell search, comprising:
a transmitting module, configured to transmit first information at a predetermined frequency position(s), wherein the first information is used to indicate a search range of system information, wherein the system information is used for cell search.

**57.** A terminal, comprising:

a processor;
a transceiver communicably connected to the processor; and
a memory configured to store one or more executable instructions executable by the processor,
wherein the terminal is configured to load and execute the one or more executable instructions, such that the terminal performs the method for cell search as defined in any one of claims 1 to 27.

**58.** A network device, comprising:

a processor;
a transceiver communicably connected to the processor; and
a memory configured to store one or more executable instructions executable by the processor,
wherein the network device is configured to load and execute the one or more executable instructions, such that the network device performs the method for cell search as defined in any one of claims 28 to 54.

**59.** A computer-readable storage medium, storing therein one or more executable instructions; wherein the one or more executable instructions, when loaded and executed by a processor, cause the processor to perform the method for cell search as defined in any one of claims 1 to 54.

**60.** A chip, comprising: one or more programmable logic circuits or one or more programs, wherein the chip, when running the one or more programmable logic circuits or the one or more programs, is caused to perform the method for cell search as defined in any one of claims 1 to 54.

61. A computer program product, comprising: one or more computer instructions stored in a computer-readable storage medium, wherein the one or more computer instructions, when read by a processor of a computer device from the computer-readable storage medium and executed by the processor, cause the computer device to perform the method for cell search as defined in any one of claims 1 to 54.

FIG. 1

FIG. 2

GSCN +n

GSCN start point

302

GSCN +3

GSCN +2

GSCN +1

301

Synchronization raster

Non cell-defining SSB

Synchronization raster range where no cell-defining SSB is present

GSCN -1

GSCN -2

GSCN -3

303

GSCN end point

GSCN -n

FIG. 3

Communication system 400

Core network

30

20

Access network

10

Terminal device

FIG. 4

502

Searching for first information at a predetermined frequency position(s)

FIG. 5

602

| Transmitting first information at a predetermined frequency position(s) |
|---|

FIG. 6

| Terminal | | Network device |
|---|---|---|

702. First information

FIG. 7

Frequency

⋮

Synchronization raster 801

Predetermined synchronization raster 802

⋮

FIG. 8

FIG. 9

FIG. 10

Radio frame 1

Frequency

First information 1101  System information 1102

Frame offset

Radio frame 2

Time

**FIG. 11**

Receiving module — 1201

**FIG. 12**

Transmitting module — 1301

**FIG. 13**

Communication device 1400

Processor 1401  Transmitter 1403

Bus 1405

Receiver 1402  Memory 1404

**FIG. 14**

# INTERNATIONAL SEARCH REPORT

| International application No. |
| --- |
| **PCT/CN2023/118915** |

| A. | CLASSIFICATION OF SUBJECT MATTER |
| --- | --- |
| | H04W48/16(2009.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

DWPI; VCN; ENTXT; 3GPP: 广播信息, 小区搜索, 广播信号, 预设, 预定, 设定, 预置, 预先设定, 预订, 预先设置, 频率, 搜索, 盲, 同步, 参考, 时域, 频域, 位置, PBCH, SSB, PSS, SSS, DMRS, cell, search, frequency, time, domain, blind, preset

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110896555 A (HUAWEI TECHNOLOGIES CO., LTD.) 20 March 2020 (2020-03-20) description, paragraphs 182-188, 212-448, and 504-606, and figures 3, 8-9, and 13-14 | 1-61 |
| A | CN 114301497 A (CHONGQING LIANGJIANG SATELLITE MOBILE COMMUNICATION CO., LTD.) 08 April 2022 (2022-04-08) entire document | 1-61 |
| A | US 2016242211 A1 (ELECTRONICS & TELECOMMUNICATIONS RESEARCH INSTITUTE) 18 August 2016 (2016-08-18) entire document | 1-61 |
| A | MEDIATEK INC. "UE Behaviors in NR Cell Search" *3GPP TSG-RAN WG4 NR AH Meeting #3, R4-1709337*, 21 September 2017 (2017-09-21), entire document | 1-61 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 April 2024** | **07 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118915**

| Patent document cited in search report | | | Publication date (day/month/year) | Patent family member(s) | | | Publication date (day/month/year) |
|---|---|---|---|---|---|---|---|
| CN | 110896555 | A | 20 March 2020 | US | 2021329507 | A1 | 21 October 2021 |
| | | | | EP | 3852438 | A1 | 21 July 2021 |
| | | | | WO | 2020052198 | A1 | 19 March 2020 |
| CN | 114301497 | A | 08 April 2022 | None | | | |
| US | 2016242211 | A1 | 18 August 2016 | KR | 20150095004 | A | 20 August 2015 |

Form PCT/ISA/210 (patent family annex) (July 2022)